# EUROPÄISCHE PATENTSCHRIFT

(11) **EP 0 728 775 B1**
(45) Veröffentlichungstag und Bekanntmachung des Hinweises auf die Patenterteilung: **04.10.2001**
(21) Anmeldenummer: 96101800.9
(22) Anmeldetag: 08.02.1996
(51) Int. Cl.: C08F 212/14, C08F 246/00, H05B 33/14, C09K 11/06

(54) **(Co)Polymerisate auf Basis von Vinyl-Einheiten und ihre Verwendung in elektrolumineszierenden Anordnungen**
(Co)polymers based on vinyl monomers and their use in electroluminescent devices
(Co)polymères à base vinilique et leur usage in dispositifs électroluminescents

(30) Priorität: 21.02.1995 DE 19505942
(43) Veröffentlichungstag der Anmeldung: 28.08.1996
(73) Patentinhaber: BAYER AG, 51368 Leverkusen (DE)
(72) Erfinder: Chen, Yun, Dr., D-47800 Krefeld (DE); Wehrmann, Rolf, Dr., D-47800 Krefeld (DE); Elschner, Andreas, Dr., D-45479 Mülheim (DE); Dujardin, Ralf, Dr., D-47877 Willich (DE)

(56) Entgegenhaltungen:
- FR-A- 2 316 313

## Beschreibung

Bei der Entwicklung lichtemittierender Bauteile für Elektronik oder Photonik kommen heute hauptsächlich anorganische Halbleiter, wie Galliumarsenid, zum Einsatz. Auf Basis derartiger Substanzen können punktförmige Anzeigeelemente hergestellt werden. Großflächige Anordnungen sind nicht möglich.

Neben den Halbleiterleuchtdioden sind elektrolumineszierende Anordnungen auf Basis aufgedampfter niedermolekularer organischer Verbindungen bekannt. (US-P 4 539 507, US-P 4 769 262, US-P 5 077 142, EP-A 406 762). Auch mit diesen Materialien können - bedingt durch das Herstellverfahren - nur kleindimensionierte LEDs hergestellt werden. Außerdem besitzen diese elektrolumineszierenden Anordnungen einen hohen Herstellungsaufwand und eine nur sehr geringe Betriebsdauer.

Polymere, wie Poly-(p-phenylene) und Poly-(p-phenylenvinylene), werden als elektrolumineszierend beschrieben: Adv. Mater. 4 (1992) No. 1; J. Chem. Soc., Chem. Commun. 1992, S. 32-34; Polymer, 1990, Vol. 31, 1137; Physical Review B, Vol. 42, No. 18, 11670 oder WO 90/13148.

Im Gegensatz zu den durchkonjugierten Polymeren werden auch nichtdurchkonjugierte Polykondensate mit lumineszierenden Struktureinheiten in elektrolumineszierenden Anordnungen beschrieben (Macromol. Chem. Phys. 195, 2023-2037 (1994).

Die vorliegende Erfindung stellt zum Aufbau elektrolumineszierender Anordnungen Copolymere auf einer wohl bekannten Basisstruktur wie Polystyrol und Polyacrylat mit kovalent gebundenen Luminophoreinheiten in den Seitenketten bereit. Im Hinblick auf eine Verwendung als elektrolumineszierende Materialien sind derartige Polymere aufgrund ihrer einfachen Herstellungsverfahren und guten Verarbeitbarkeit von technologischem Interesse. Elektrolumineszierende Anordnungen, die diese Copolymere enthalten, zeichnen sich durch hohe Leuchtintensitäten und eine breite Vielfalt an Farbtönen aus. Die Vorteile der erfindungsgemäßen Copolymerisate liegen z.B. darin, daß sich
1. die Leuchtintensitäten durch Variation der Luminophorkonzentration gezielt verändern lassen,
2. die Farbtöne durch Kombination verschiedener luminopherhaltiger Monomere einstellen lassen,
3. die Morphologie und elektrischen Eigenschaften der Polymerschichten durch Einführung geeigneter Seitenkettenbausteine optimieren lassen.

Die vorliegende Erfindung betrifft Copolymerisate, die mindestens zwei wiederkehrende Kettenbausteine der allgemeinen Formel (1) und/oder (2) enthalten und gegebenenfalls wiederkehrende Einheiten der allgemeinen Formel (3) enthalten 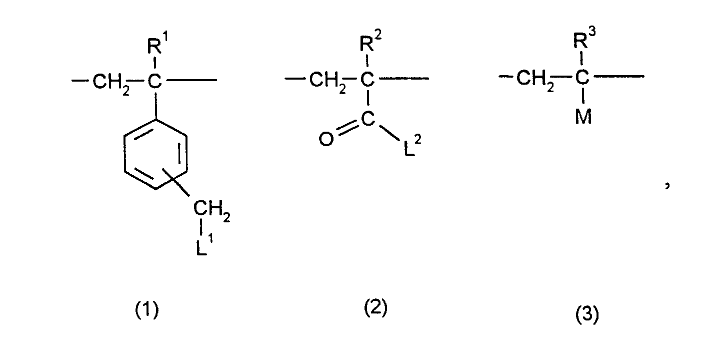 worin
- R¹, R² und R³: unabhängig voneinander Wasserstoff oder C₁-C₆-Alkyl bedeuten,
- M: für CN oder C₁-C₃₀-Alkoxycarbonyl, C₁-C₃₀-(Di)Alkylaminocarbonyl, C₁-C₃₀-Alkylcarbonyl steht, die jeweils durch Hydroxy oder C₁-C₆-Alkoxycarbonyl substituiert sein können, weiterhin für Phenyl, Naphthyl, Anthracenyl, Pyridyl oder Carbazolyl steht, die jeweils durch Reste aus der Gruppe Halogen, Hydroxy, Silyl, C₁-C₃₀-Alkyl, C₆-C₁₈-Aryl, C₁-C₃₀-Alkoxy, C₁-C₃₀-Alkoxycarbonyl, C₁-C₃₀-Acyloxy und C₁-C₃₀-Alkylcarbonyl substituiert sein können,
- L¹ und L²: einen photolumineszierenden Rest bedeuten,
wobei der Anteil der Struktureinheiten der Formel (3) 40 bis 99,5 Mol-% und der Anteil an Struktureinheiten (1) und/oder (2) jeweils 0,5 bis 60 Mol-% beträgt und sich die Molanteile zu 100 % ergänzen.

In den obengenannten Formeln bedeuten R¹, R² und R³ unabhängig voneinander vorzugsweise Wasserstoff, Methyl oder Ethyl.

M steht vorzugsweise für CN oder C₁-C₁₅-Alkoxycarbonyl, C₁-C₁₅-(Di)Alkylaminocarbonyl, C₁-C₁₅-Alkylcarbonyl, die jeweils durch Hydroxy oder Methoxycarbonyl, Ethoxycarbonyl, n- oder iso-Propoxycarbonyl substituiert sein können, weiterhin für Phenyl, Naphthyl, Anthracenyl, Pyridyl oder Carbazolyl, die jeweils durch Reste aus der Gruppe Chlor, Brom, Hydroxy, Silyl, C₁-C₆-Alkyl, C₁-C₆-Alkoxy, C₁-C₆-Alkoxycarbonyl, C₁-C₆-Acyloxy und C₁-C₆-Alkylcarbonyl, gegebenenfalls durch Methyl, Ethyl, n- oder iso-Propyl substituiertes Phenyl, substituiert sein können.

L¹ und L² stehen unabhängig voneinander für einen photolumineszierenden Rest, der auf dem Gerüst eines Fluoreszenzfarbstoffs basiert, der ausgewählt ist aus der Gruppe der Cumarine der Formel (4)

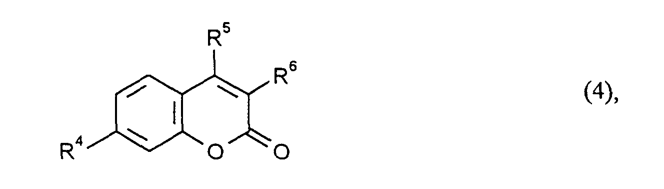

### Pyrene der Formel (5)

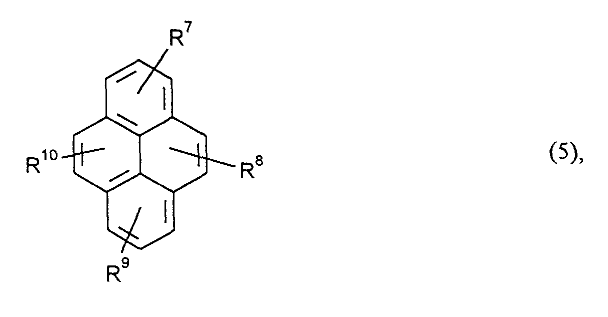

### 1,8-Naphthalimide der Formel (6)

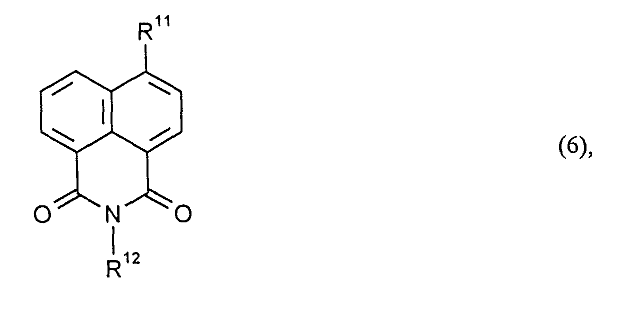

### 1,8-Naphthaloylen-1',2'-benzimidazole der Formel (7a) und (7b)

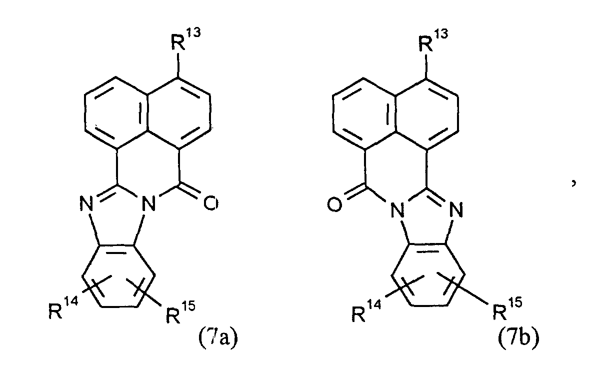

### Phenothiazine oder Phenoxazine der Formel (8)

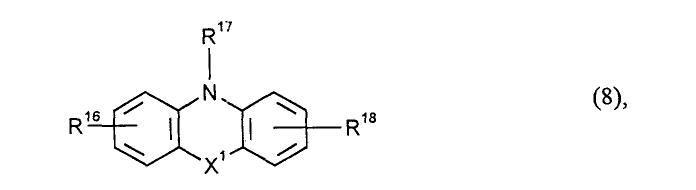

mit X¹ = 0 oder S,

### Benzopyrone der Formel (9)

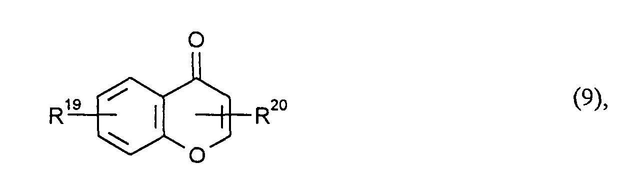

### Carbazole, Fluorene, Dibenzothiophene und -furane der Formel (10)

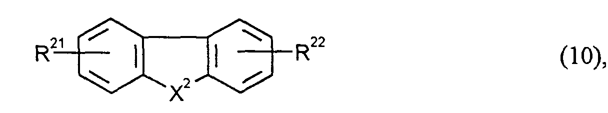

mit X² = NR²³, CH₂, S oder O, wobei R²³ für Wasserstoff oder C₁-C₆-Alkyl, vorzugsweise Wasserstoff oder C₁-C₄-Alkyl, steht,

### Oxazole, 1,3,4-Oxadiazole der Formel (11)

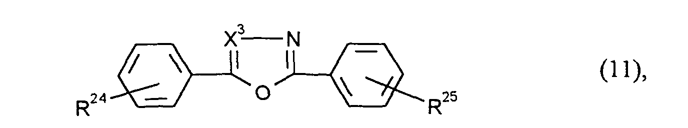

mit X³ = CH oder N

### Benzochinoline der Formel (12)

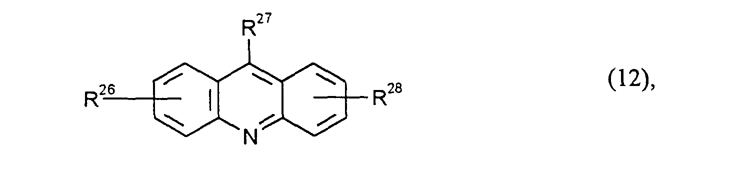

### 9,10-Bis-(Phenylethinyl)-Anthracene der Formel (13)

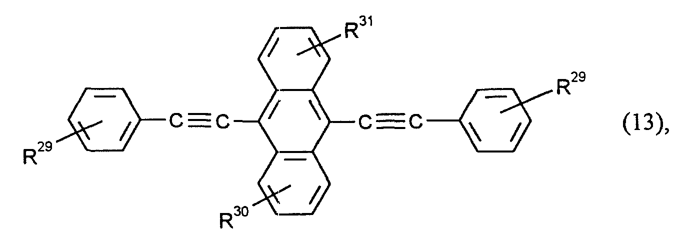

### Fluorone der Formel (14)

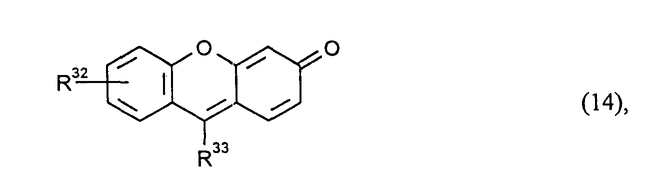

### 9,10-Diphenylanthracen der Formel (15)

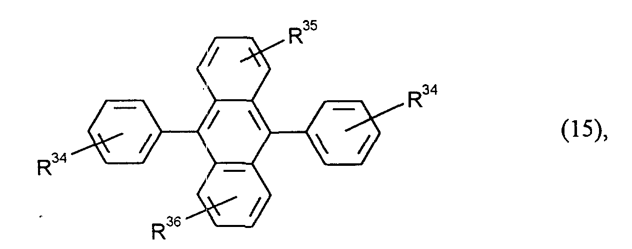

### 2-Styrylbenzazol der Formel (16)

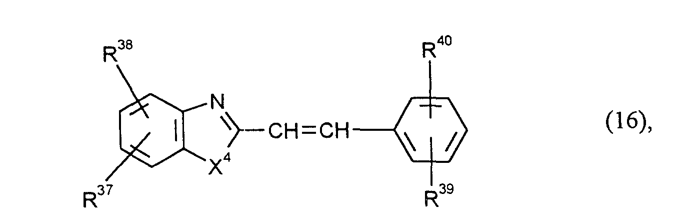

mit X⁴ = O, S, Se oder CH₂, wobei
- R⁴: für Wasserstoff, C₁-C₃₀-Alkyl, C₆-C₁₈-Aryl, C₇-C₂₄-Aralkyl oder C₁-C₃₀-Alkoxy oder für 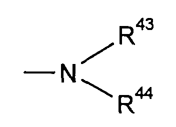 steht, wobei
R⁴³ und R⁴⁴ unabhängig voneinander für Wasserstoff, C₁-C₃₀-Alkyl, C₆-C₁₈-Aryl, C₇-C₂₄-Aralkyl steht, die jeweils durch Hydroxy, Amino, Carboxy oder C₁-C₄-Alkoxycarbonyl substituiert sein können, oder
R⁴³ und R⁴⁴ gemeinsam mit dem Stickstoff-Atom, an das sie gebunden sind, einen Morpholin-, Piperidin-, Pyrrolidin- oder Piperazinring, der einen oder zwei Substituenten aus der Gruppe Methyl, Ethyl und Phenyl tragen kann, bedeuten können,
- R⁵: für Wasserstoff, Cyano, C₁-C₃₀-Alkyl, C₆-C₁₈-Aryl, C₇-C₂₄-Aralkyl, C₁-C₃₀-Alkoxy, C₂-C₁₂-Acyl, C₁-C₁₂-Alkoxycarbonyl, C₁-C₁₂-(Di)Alkylaminocarbonyl steht,
- R⁶: für Wasserstoff, Cyano, C₁-C₃₀-Alkyl, C₆-C₁₈-Aryl, C₇-C₂₄-Aralkyl, C₁-C₃₀-Alkoxy oder für 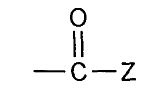 steht, wobei Z für eine Gruppe OR⁴⁵ oder 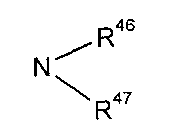 steht und
R⁴⁵, R⁴⁶ und R⁴⁷ unabhängig voneinander für C₁-C₃₀-Alkyl, C₆-C₁₈-Aryl oder C₇-C₂₄-Aralkyl stehen, wobei die aromatischen Ringe zusätzlich noch durch Halogen, C₁-C₆-Alkyl, C₁-C₆-Alkoxy substituiert sein können,
- R⁷, R⁸ und R⁹: unabhängig voneinander Wasserstoff, C₁-C₃₀-Alkyl, C₆-C₁₈-Aryl, C₇-C₂₄-Aralkyl, C₁-C₃₀-Alkoxy, Cyano, C₂-C₁₂-Acyl, C₁-C₁₂-Alkoxycarbonyl, C₁-C₁₂-(Di)Alkylaminocarbonyl oder eine Aminogruppe mit einer oder zwei C₁-C₆-Alkylgruppen bedeuten,
- R¹⁰: Wasserstoff, Cyano, C₁-C₃₀-Alkyl, C₆-C₁₈-Aryl, C₇-C₂₄-Aralkyl, C₁-C₃₀-Alkoxy, Amino, C₂-C₁₂-Acyl, C₁-C₁₂-Alkoxycarbonyl, C₁-C₁₂-(Di)-Alkylaminocarbonyl bedeutet,
- R¹¹: für Wasserstoff, Halogen, Nitro, C₁-C₄-Alkoxycarbonyl, C₁-C₄-Acyl, C₈-C₂₄-Aralkenyl, unsubstituiertes Amino oder für ein- oder zweifach, gleich oder verschieden durch C₁-C₃₀-Alkyl, C₆-C₁₈-Aryl oder C₇-C₂₄-Aralkyl substituiertes Amino steht,
- R¹¹: weiterhin für Morpholinyl, Piperidinyl, Pyrrolidinyl oder Piperazinyl steht, die einen oder zwei Substituenten ausgewählt aus Methyl, Ethyl und/oder Phenyl tragen können,
- R¹²: für Wasserstoff, C₁-C₃₀-Alkyl, C₆-C₁₈-Aryl, C₇-C₂₄-Aralkyl oder C₁-C₃₀-Alkoxy steht,
- R¹³: für Wasserstoff, C₁-C₃₀-Alkyl, C₆-C₁₈-Aryl, C₇-C₂₄-Aralkyl, C₁-C₃₀-Alkoxy oder 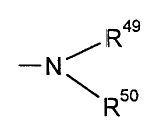 steht, wobei
R⁴⁹ und R⁵⁰ unabhängig voneinander für C₁-C₃₀-Alkyl, C₆-C₁₈-Aryl, C₇-C₂₄-Aralkyl stehen oder
R⁴⁹ und R⁵⁰ weiterhin gemeinsam mit dem Stickstoffatom, an das sie gebunden sind, für Morpholinyl, Piperidinyl, Pyrrolidinyl oder Piperazinyl stehen, die einen oder zwei gleich oder verschiedene Substituenten ausgewählt aus Methyl, Ethyl und Phenyl tragen können,
- R¹⁴ und R¹⁵: unabhängig voneinander Wasserstoff, Cyano, Halogen, Nitro, C₁-C₃₀-Alkyl, C₁-C₃₀-Alkoxy, C₆-C₁₈-Aryl oder C₇-C₂₄-Aralkyl, C₁-C₁₂-Alkoxycarbonyl, C₂-C₁₂-Acyl, C₁-C₁₂-(Di)Alkylaminocarbonyl, C₁-C₆-(Di)Alkylamino bedeuten,
- R¹⁷ und R²³: unabhängig voneinander Wasserstoff, C₁-C₃₀-Alkyl, C₆-C₁₈-Aryl oder C₇-C₂₄-Aralkyl bedeuten und
- R¹⁶, R¹⁸ bis R²² und R²⁴ bis R⁴⁰: unabhängig voneinander Wasserstoff, Cyano, C₁-C₃₀-Alkyl, C₆-C₁₈-Aryl, C₇-C₂₄-Aralkyl, C₁-C₃₀-Alkoxy, eine Aminogruppe mit einer oder zwei C₁-C₆-Alkylgruppen, unsubstituiertes Amino, C₂-C₁₂-Acyl, C₁-C₁₂-Alkoxycarbonyl oder C₁-C₁₂-(Di)Alkylaminocarbonyl bedeuten, wobei die aliphatischen Kohlenstoffketten, wie z.B. Alkyl, Alkoxy, Alkylamino, Aralkyl, in den Resten von R⁴ bis R¹³, R¹⁶ bis R⁴⁰ durch eines oder mehrere, vorzugsweise ein oder zwei Heteroatome ausgewählt aus Sauerstoff, Stickstoff und Schwefel und/oder durch einen oder mehrere, vorzugsweise ein oder zwei Phenylenringe, die durch C₁-C₄-Alkyl und/oder Halogen substituiert sein können, unterbrochen sein können,
und wobei weiterhin die Anknüpfung des Luminophors an die Polymerseitenketten über ein Sauerstoff einer Hydroxy- oder Carboxygruppe oder ein Stickstoff einer Amino- oder primären Aminogruppe an den obengenannten Substituenten erfolgt.

In den o.g. Resten R⁴ bis R⁴⁰ trägt pro Fluoreszenzfarbstoff mindestens eine aliphatische, aromatische oder heterocyclische Kohlenstoffkette wenigstens eine Hydroxy-, Carboxy- oder gegebenenfalls eine Amino-Gruppe, vorzugsweise Hydroxy, über die die kovalente Bindung an das Monomere hergestellt wird durch Reaktion dieser Gruppen mit einer am Monomer befindlichen reaktiven Gruppe (z.B. Halogen), vgl. Herstellungsverfahren. Im Falle des Monomers (1) ist diese Anknüpfungsstelle die Methylengruppe am Phenylring (es reagiert -CH₂-Cl). Im Falle des Monomers (2) ist die Anknüpfungsstelle die Carbonylgruppe (über -CO-Cl).

M steht insbesondere für Phenyl, Naphthyl, Anthracenyl, Pyridyl oder Carbazolyl, die jeweils durch Hydroxy, Silyl, C₁-C₄-Alkyl, gegebenenfalls durch Methyl, Ethyl, n- oder iso-Propyl substituiertes Phenyl, durch C₁-C₄-Alkoxy, C₁-C₆-Alkoxycarbonyl, C₁-C₆-Acyloxy oder C₁-C₆-Alkylcarbonyl substituiert sein können.

L¹ und L² stehen unabhängig voneinander insbesondere für einen Fluoreszenzfarbstoffrest ausgewählt aus der Gruppe der Cumarine der Formel (4), Pyrene der Formel (5), 1,8-Naphthalimide der Formel (6), 1,8-Naphthaloylen-1',2'-benzimidazole der Formel (7), Phenothiazine oder Phenoxazine der Formel (8), Carbazole und Fluorene der Formel (10).
- R⁴: steht vorzugsweise für C₁-C₆-Alkyl, C₆-C₁₀-Aryl oder C₁-C₆-Alkoxy oder für 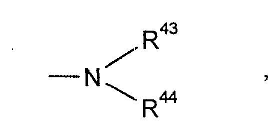 wobei
R⁴³ und R⁴⁴ vorzugsweise unabhängig voneinander für C₁-C₆-Alkyl, C₆-C₁₀-Aryl steht, die jeweils durch Hydroxy, Amino substituiert sein können, oder
R⁴³ und R⁴⁴ gemeinsam mit dem Stickstoff-Atom, an das sie gebunden sind, einen Morpholin-, Piperidin-, Pyrrolidin- oder Piperazinring, der einen oder zwei Substituenten aus der Gruppe Methyl, Ethyl und Phenyl tragen kann, bedeuten können.
- R⁵: steht vorzugsweise für Wasserstoff oder Cyano,
- R⁶: steht vorzugsweise für Wasserstoff, C₁-C₆-Alkyl, C₆-C₁₀-Aryl oder C₁-C₆-Alkoxy oder für 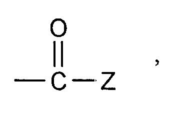 wobei Z für eine Gruppe OR⁴⁵ oder 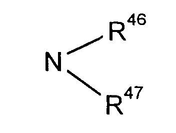 steht und
R⁴⁵, R⁴⁶ und R⁴⁷ unabhängig voneinander vorzugsweise für C₁-C₆-Alkyl oder C₆-C₁₀-Aryl, insbesondere Phenyl und Naphthyl, stehen,
- R⁷, R⁸: und R⁹ stehen vorzugsweise unabhängig voneinander für Wasserstoff, C₁-C₆-Alkyl, C₆-C₁₀-Aryl, C₁-C₆-Alkoxy oder Cyano,
- R¹⁰: steht vorzugsweise für Wasserstoff, Cyano, C₁-C₆-Alkyl, C₆-C₁₀-Aryl, insbesondere Phenyl oder Naphthyl, C₂C₄-Acyl oder C₁-C₆-Alkoxycarbonyl,
- R¹¹: steht vorzugsweise für Wasserstoff, Halogen, Nitro, C₁-C₄-Alkoxycarbonyl, C₁-C₄-Acyl, C₈-C₂₄-Aralkenyl, für ein- oder zweifach, gleich oder verschieden durch C₁-C₆-Alkyl, C₆-C₁₀-Aryl, insbesondere Phenyl oder Naphthyl substituiertes Amino,
- R¹¹: steht weiterhin für Morpholinyl, Piperidinyl, Pyrrolidinyl oder Piperazinyl steht, die einen oder zwei Substituenten ausgewählt aus Methyl, Ethyl und/oder Phenyl tragen können,
- R¹²: steht vorzugsweise für C₁-C₆-Alkyl, C₆-C₁₀-Aryl, insbesondere Phenyl oder Naphthyl, oder C₇-C₁₂-Aralkyl.
- R¹³: steht vorzugsweise für Wasserstoff, C₁-C₆-Alkyl, C₆-C₁₀-Aryl, insbesondere Phenyl oder Naphthyl, oder C₁-C₆-Alkoxy oder 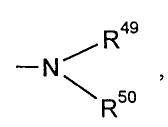 wobei
R⁴⁹ und R⁵⁰ unabhängig voneinander vorzugsweise für C₁-C₆-Alkyl, C₆-C₁₀-Aryl, insbesondere Phenyl oder Naphthyl stehen, oder
R⁴⁹ und R⁵⁰ weiterhin gemeinsam mit dem Stickstoffatom, an das sie gebunden sind, für Morpholinyl, Piperidinyl, Pyrrolidinyl oder Piperazinyl stehen, die einen oder zwei gleich oder verschiedene Substituenten ausgewählt aus Methyl, Ethyl und Phenyl tragen können.
- R¹⁴ und R¹⁵: stehen vorzugsweise unabhängig voneinander Wasserstoff, Cyano, Halogen, Nitro, C₁-C₆-Alkyl, C₁-C₆-Alkoxy, C₆-C₁₀-Aryl, insbesondere Phenyl oder Naphthyl,
- R¹⁷ und R²³: stehen vorzugsweise unabhängig voneinander für Wasserstoff, C₁-C₆-Alkyl, C₆-C₁₀-Aryl.
- R¹⁶, R^{1 8} bis R²² und R²⁴ bis R⁴⁰: stehen vorzugsweise unabhängig voneinander für Wasserstoff, Cyano, C₁-C₆-Alkyl, C₆-C₁₀-Aryl, C₁-C₆-Alkoxy, eine Aminogruppe mit einer oder zwei C₁-C₆-Alkylgruppen, unsubstituiertes Amino,
wobei die aliphatischen Kohlenstoffketten, wie z.B. Alkyl, Alkoxy, Alkylamino, Aralkyl, in den Resten von R⁴ bis R¹³, R¹⁶ bis R⁴⁰ durch ein Heteroatom ausgewählt aus Sauerstoff, Stickstoff und Schwefel und/oder durch einen Phenylenring unterbrochen sein können.

Als Alkylrest beispielsweise in Alkyl, Alkoxy, Alkoxycarbonyl oder (Di)Alkylamino wird beispielhaft Methyl, Ethyl, n- oder iso-Propyl, n-, iso- oder tert.-Butyl genannt. Aryl steht insbesondere für Phenyl und Naphthyl. Aralkyl steht insbesondere für Phenyl-C₁-C₄-Alkyl, z.B. Phenylmethyl, Phenylethyl oder Naphthyl-C₁-C₄-alkyl, z.B. Naphthylmethyl, Naphthylethyl.

Die vorliegende Erfindung betrifft weiterhin ein Verfahren zur Herstellung von obengenannten Copolymerisaten, die mindestens zwei wiederkehrende Kettenbausteine der allgemeinen Formel (1) und/oder (2) und gegebenenfalls wiederkehrende Einheiten der allgemeinen Formel (3) enthalten, 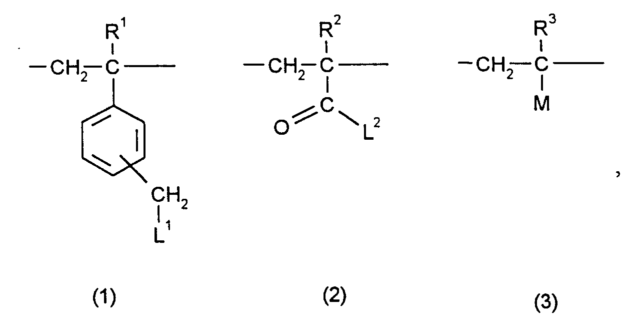 wobei die Reste die obengenannten Bedeutungen haben,
wobei man die entsprechenden Monomere der Formel (20) oder (21) 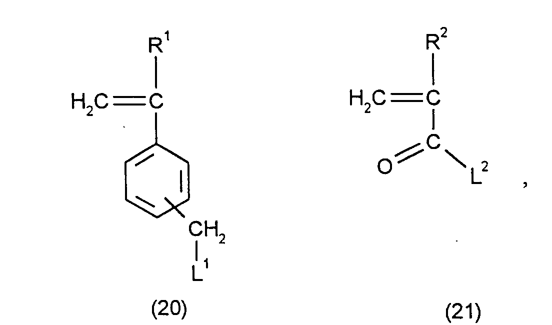 aus einem mit einer OH-, COOH- oder NH-Gruppe funktionalisierten Fluoreszenzfarbstoff, welcher die Struktur von L enthält,
und einem Styrol- oder Acrylsäurederivat der Formel (22) und (23) 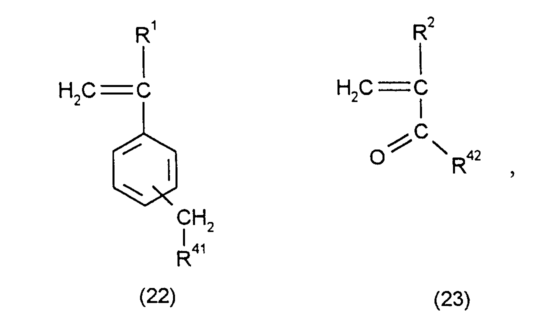 worin
- R¹ und R²: den obengenannten Bedeutungsumfang haben und
- R⁴¹: für ein Halogenatom, vorzugsweise C1 oder Br steht,
- R⁴²: für ein Halogenatom, vorzugsweise C1 oder Br, eine Hydroxy- oder C₁-C₆-Alkoxygruppe , steht,
in Gegenwart einer Base, vorzugsweise Triethylamin, Pyridin oder ein Alkalimetall-Alkoholat, herstellt und diese dann einer Polymerisation gegebenenfalls in Gegenwart von Comonomeren der Bausteine gemäß Formel (3) unterwirft.

Die Umsetzung der mit OH-, Carboxy- oder NH-Gruppe funktionalisierten Fluoreszenz-Farbstoffen erfolgt im allgemeinen bei Temperaturen von -30°C bis 100°C, vorzugsweise 0°C bis 60°C.

Die Polymerisationsverfahren sind in der Literatur beschrieben. Sie können ionisch oder radikalisch erfolgen. Eine anionische Polymerisation kann z.B. durch Starter wie Butyllithium oder Lithiumnaphthalid ausgelöst werden. Eine radikalische Polymerisation kann z.B. durch Radikalstarter wie z.B. Azoinitiatoren oder Peroxide, vorzugsweise AIBN (Azoisobuttersäuredinitril) oder Dibenzoylperoxid, ausgelöst werden. Die Herstellung der Polymere kann in Substanz oder in geeigneten Lösungsmitteln wie Benzol, Toluol, Tetrahydrofuran, Dioxan, Ethylacetat, Xylol, Chlorbenzol, 1-Methoxy-2-propylacetat, chlorierte Kohlenwasserstoffe, Aceton, etc., bei Temperaturen von 20-250°C erfolgen.

Die Herstellung der erfindungsgemäßen Copolymerisate wird beispielsweise durch das folgende Formelschema dargestellt: 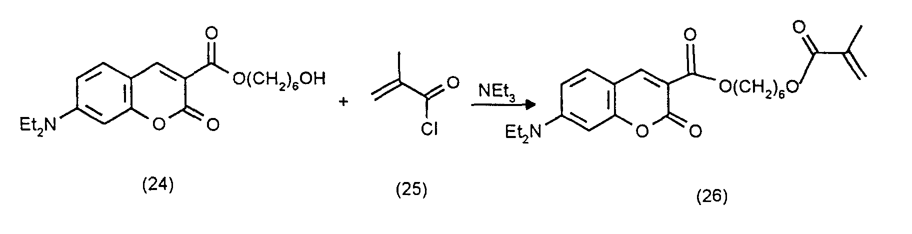 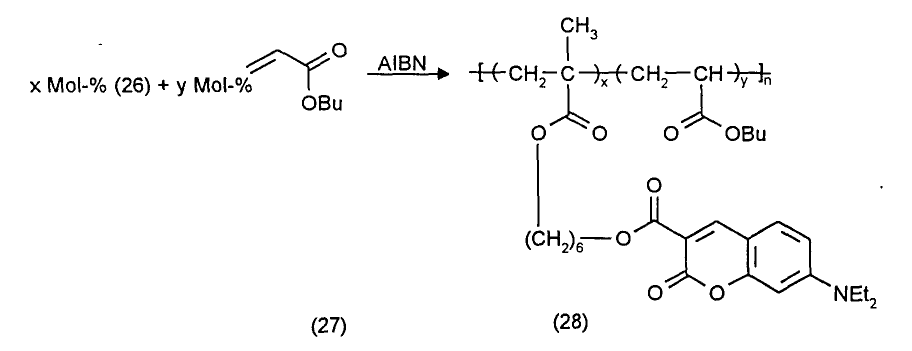 Hierbei wird ausgehend von 3-(6-Hydroxyhexoxycarbonyl)-7-diethylaminocumarin (24) und Methacryloylchlorid (25) unter Mitwirkung von Triethylamin bei 0°C bis Raumtemperatur zunächst das Methacrylat (26) hergestellt. Das Methacrylat (26) läßt sich in Gegenwart von n-Butylacrylat (27) als Comonomer unter Mitwirkung von AIBN als Radikalstarter in Chlorbenzol bei 100°C unter Bildung des Copolymerisats (28) polymerisieren. Der Mol-%-Anteil x an Comonomer (26) liegt zwischen 0,5 bis 60 %.

Weiterhin kann die Herstellung der erfindungsgemäßen Copolymerisate beispielsweise durch das folgende Formelschema dargestellt werden: 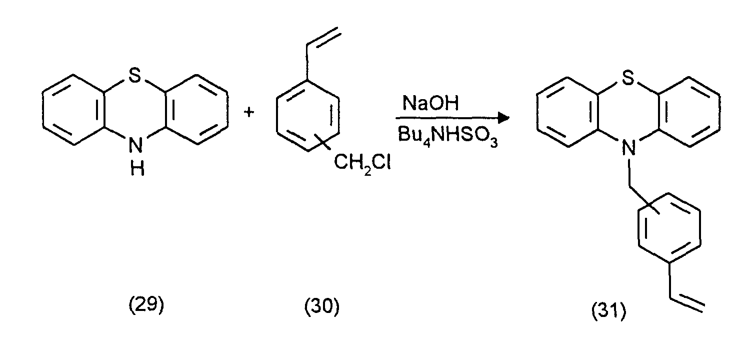 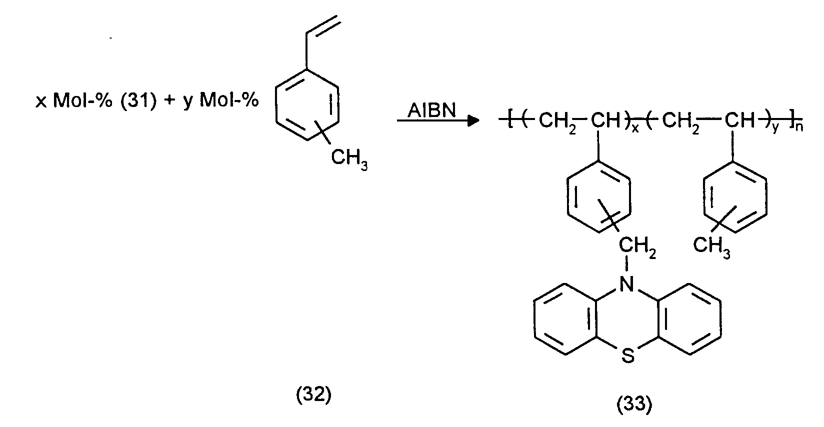 Hierbei wird in einer phasentransferkatalysierten Reaktion ausgehend von Phenothiazin (29) und m/p-Vinylbenzylchlorid (30) unter Mitwirkung von Natronlauge und Tributylammoniumhydrogensulfit in katalytischer Menge bei 0°C bis Raumtemperatur zunächst das Styrolderivat (31) hergestellt. Das Styrolderivat (31) läßt sich in Gegenwart von m/p-Methylstyrol (32) als Comonomer unter Mitwirkung von AIBN als Radikalstarter in Toluol bei 80°C bis 100°C unter Bildung des Copolymerisats (33) polymerisieren. Der Mol-%-Anteil x an Comonomer (31) liegt zwischen 0,5 bis 60 %.

Weiterhin kann die Herstellung der erfindungsgemäßen Copolymerisate beispielsweise durch das folgende Formelschema dargestellt werden:

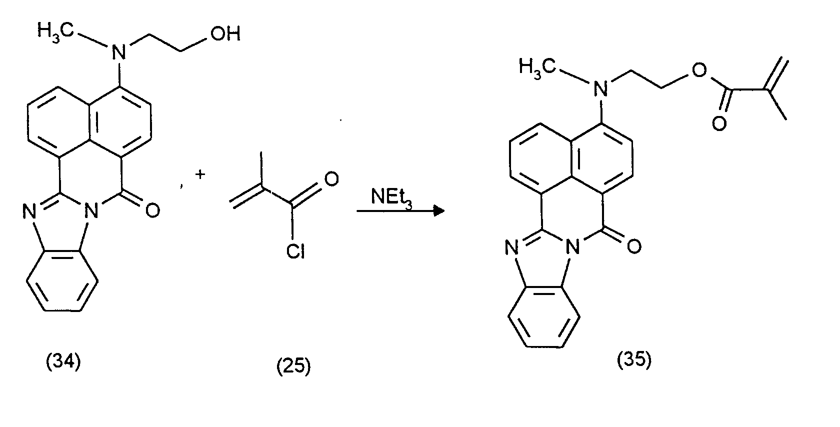

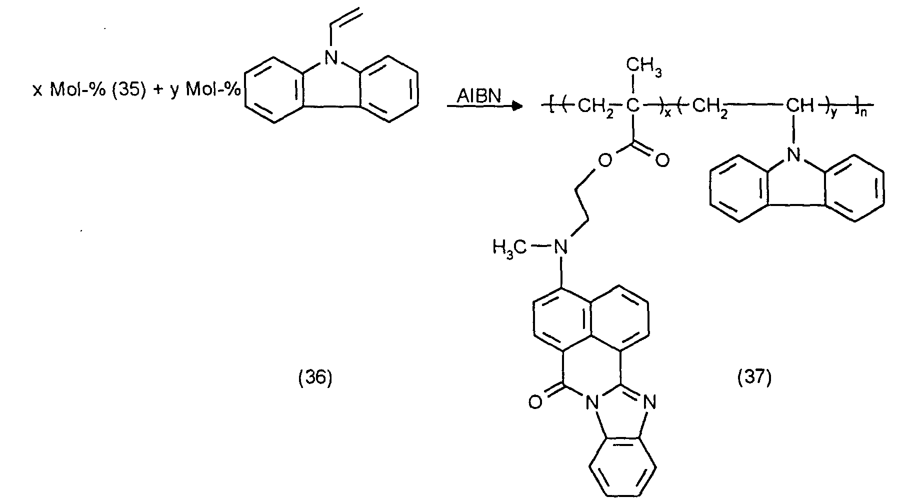

Hierbei wird ausgehend von 4/5-(N-Methyl-N-hydroxyethyl)amino-1,8-naphthoylen-1'2'-benzimidazol (34) (nur 4-Isomer wird abgebildet) und Methacryloylchlorid (25) unter Mitwirkung von Triethylamin bei 0°C bis Raumtemperatur zunächst das Methacrylat (35) hergestellt. Das Methacrylat (35) läßt sich in Gegenwart von N-Vinylcarbazol (36) als Comonomer unter Mitwirkung von AIBN als Radikalstarter in Chlorbenzol bei 80°C unter Bildung des Copolymerisats (37) polymerisieren. Der Mol-%-Anteil an Comonomer (35) liegt zwischen 0,5 - 60 %.

Weiterhin kann die Herstellung der erfindungsgemäßen Copolymerisate beispielsweise durch das folgende Formelschema dargestellt werden:

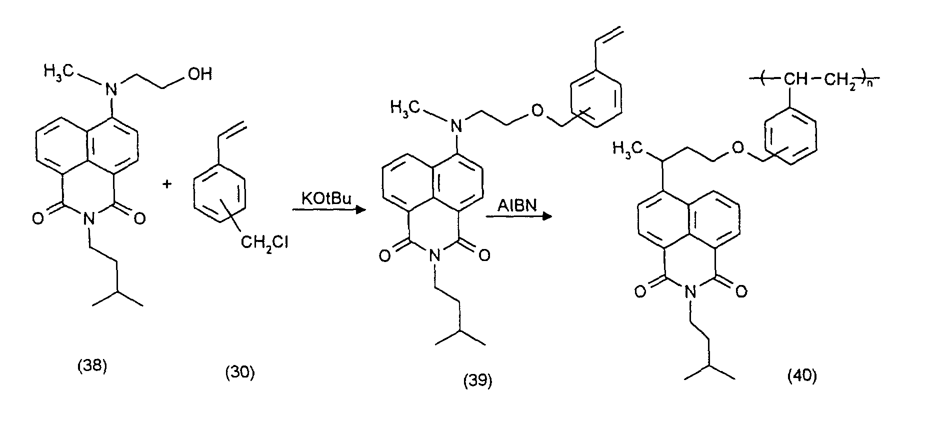

Hierbei wird ausgehend von N-isoamyl-4-(N'-Methyl-N'-hydroxyethyl)amino-1,8-naphthalimid (38) und m/p-Vinylbenzylchlorid (30) unter Mitwirkung von Kalium-tert-butylat bei Raumtemperatur in Tetrahydrofuran zunächst das Styrolderivat (39) hergestellt. Das Styrolderivat (39) läßt sich unter Mitwirkung von AIBN als Radikalstarter in Toluol bei 100°C unter Bildung des Homopolymerisates (40) polymerisieren.

Das Styrolderivat (39) läßt sich auch mit einem Comonomer wie z.B. N-Vinylcarbazol, Styrol, n-Butylacrylat, etc. copolymerisieren.

Copolymerisate der vorliegenden Erfindung weisen Molekulargewichte im Bereich von 500 bis 1 Million g/Mol, vorzugsweise von 800 bis 500 000 g/Mol - bestimmt durch Gelpermeationschromatographie - auf.

Die zur Herstellung von erfindungsgemäßen Copolymerisaten benötigten mit OH, SH oder NH funktionalisierten Fluoreszenz-Farbstoffe (vgl. Definition des Restes L) sind teilweise bekannt.

Die Cumarinderivate der folgenden Formel (4a) sind neu: 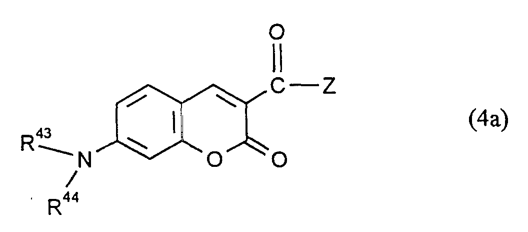 wobei
- R⁴³ und R⁴⁴: unabhängig voneinander für Wasserstoff C₁-C₃₀-Alkyl, C₆-C₁₈-Aryl, C₇-C₂₄-Aralkyl steht, die jeweils durch Hydroxy, Amino, Carboxy oder C₁-C₄-Alkoxycarbonyl substituiert sein können, oder
- R⁴³ und R⁴⁴: gemeinsam mit dem Stickstoff-Atom, an das sie gebunden sind, einen Morpholin-, Piperidin-, Pyrolidin- oder Piperazinring, der einen oder zwei Substituenten aus der Gruppe Methyl, Ethyl und Phenyl tragen kann, bedeuten können, und
- Z: eine Gruppe OR⁴⁵ oder 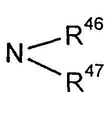 bedeutet, wobei
R⁴⁵ C₁-C₃₀-Alkyl, C₆-C₁₈-Aryl oder C₇-C₂₄-Aralkyl bedeutet, die jeweils durch mindestens eine Hydroxygruppe substituiert sind, und wobei die aromatischen Ringe zusätzlich noch durch Halogen, C₁-C₆-Alkyl, C₁-C₆-Alkoxy substituiert sein können und
R⁴⁶ und R⁴⁷ unabhängig voneinander für jeweils gegebenenfalls durch Hydroxy substituiertes C₁-C₃₀-Alkyl, C₆-C₁₈-Aryl oder C₇-C₂₄-Aralkyl stehen, wobei mindestens einer der Reste R⁴⁶ oder R⁴⁷ über eine Hydroxygruppe verfügt und wobei die aromatischen Ringe zusätzlich noch durch Halogen, C₁-C₆-Alkyl, C₁-C₆-Alkoxy substituiert sein können.

Die erfindungsgemäßen Cumarin-Derivate der Formel (4a) tragen mindestens eine Hydroxygruppe über die sie an Polymerseitenketten chemisch gebunden werden können.

In Formel (4a) stehen R⁴³ und R⁴⁴ unabhängig voneinander vorzugsweise für Wasserstoff oder gegebenenfalls durch Hydroxy, Amino, Carboxy und/oder C₁-C₄-Alkoxycarbonyl substituiertes C₁-C₁₆-Alkyl, jeweils unsubstituiertes oder durch C₁-C₄-Alkyl, Hydroxy, Amino, Carboxy, C₁-C₄-Alkoxycarbonyl, Chlor und/oder Brom substituiertes Phenyl, Naphthyl, Phenyl-C₁-C₄-alkyl oder Naphthyl-C₁-C₄-alkyl.
- R⁴³ und R⁴⁴: stehen insbesondere für gegebenenfalls durch Hydroxy, Amino oder Carboxy substituiertes C₁-C₆-Alkyl oder Phenyl,
- z: steht in der oben genannten Formel (4a) für OR⁴⁵ oder NR⁴⁶R⁴⁷, wobei R⁴⁵ vorzugsweise für C₁-C₁₆-Alkyl, Phenyl, Naphthyl, Phenyl-C₁-C₄-alkyl oder Naphthyl-C₁-C₄-alkyl steht, die jeweils durch mindestens eine Hydroxygruppe substituiert sind, und wobei die aromatischen Ringe zusätzlich noch durch Halogen, C₁-C₆-Alkyl, C₁-C₆-Alkoxy substituiert sein können,
- R⁴⁶ und R⁴⁷: stehen unabhängig voneinander vorzugsweise für jeweils gegebenenfalls durch Hydroxy substituiertes C₁-C₁₆-Alkyl, Phenyl, Naphthyl, Phenyl-C₁-C₄-alkyl oder Naphthyl-C₁-C₄-alkyl steht, wobei mindestens einer der Reste R⁴⁶ oder R⁴⁷ über eine Hydroxygruppe verfügt und die aromatischen Ringe zusätzlich noch durch Halogen, C₁-C₆-Alkyl, C₁-C₆-Alkoxy substituiert sein können.
- R⁴⁵: steht besonders bevorzugt für durch eine Hydroxygruppe substituiertes C₁-C₁₂-Alkyl.
- R⁴⁶ und R⁴⁷: stehen unabhängig voneinander besonders bevorzugt für gegebenenfalls durch eine Hydroxygruppe substituiertes C₁-C₁₂-Alkyl, wobei mindestens einer der Reste R⁴ und R⁵ über eine Hydroxygruppe verfügt.

Die neuen Cumarinderivaten der Formel (4a), 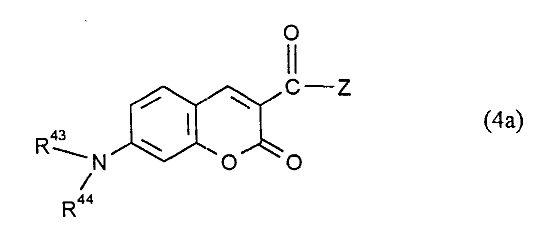 wobei R⁴³, R⁴⁴ und Z die oben genannte Bedeutung haben, lassen sich dadurch herstellen, daß man
a) im Falle, daß Z für -OR⁴⁵ steht, vorzugsweise in einem Eintopfverfahren, aus der Meldrum's-Säure der Formel (I) 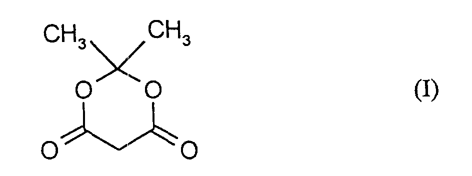 und einem Alkohol der Formel (II)

   R⁴⁵-OH (II)

   gegebenenfalls in Gegenwart eines Verdünnungsmittels wie beispielsweise Toluol, Xylol oder Mesitylen unter Katalyse von beispielsweise p-Toluolsulfonsäure bei Temperaturen im Bereich von 20 bis 250°C, vorzugsweise 80 bis 150°C, das Malonsäure-Derivat der Formel (III) herstellt, 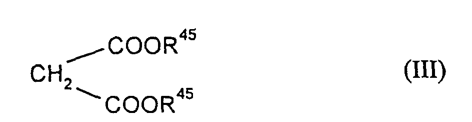 und dieses anschließend mit einem Salicylaldehyd der Formel (IV) 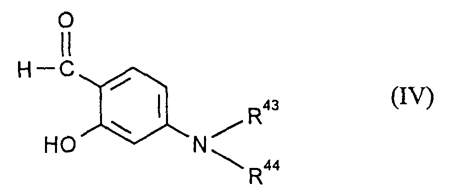 wobei R⁴³, R⁴⁴, R⁴⁵ die o.g. Bedeutung haben,
   gegebenenfalls in Gegenwart eines Verdünnungsmittels wie beispielsweise Toluol, Xylol oder Mesitylen unter Katalyse von beispielsweise Piperidinacetat bei Temperaturen von 50 bis 250°C, vorzugsweise 80 bis 140°C umsetzt, und
b) im Falle, daß Z für 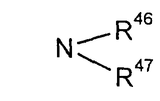 steht, einen Salicylaldehyd der Formel (IV) ein sekundäres Amin der Formel (V) und ein Malonsäure-Derivat der Formel (VI) 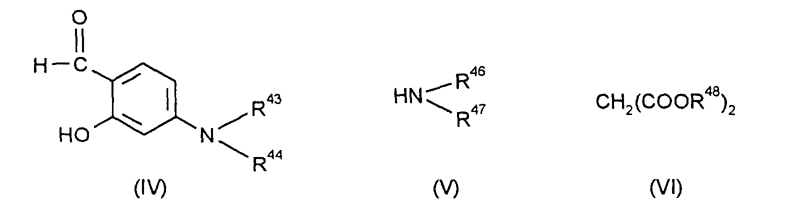 worin
   - R⁴³, R⁴⁴, R⁴⁶ und R⁴⁷: die oben genannte Bedeutung haben und
   - R⁴⁸: für C₁-C₆-Alkyl steht,
   gegebenenfalls in Gegenwart eines Verdünnungsmittels wie beispielsweise Toluol, Xylol oder Mesitylen unter Katalyse von beispielsweise Piperidinacetat bei Temperaturen von 50 bis 250°C, vorzugsweise 80 bis 140°C umsetzt.

Bei der Durchführung des erfindungsgemäßen Verfahrens a) setzt man im allgemeinen auf 1 Mol Meldrum's Säure der Formel (I) 2-10 Mol, vorzugsweise 3-6 Mol Alkohol der Formel (II) und pro Mol Malonsäure-Derivat der Formel (III) setzt man im allgemeinen 0,5-1,0, vorzugsweise 0,9-1,0 Mol Salicylaldehyd der Formel (IV) ein.

Bei der Durchführung des erfindungsgemäßen Verfahrens b) setzt man pro Mol Salicylaldehyd der Formel (IV) im allgemeinen 2-20, vorzugsweise 5-10 Mol sekundäres Amin und 1-2, vorzugsweise 1,2-1,5 Mol Malonsäure-Derivat der Formel (VI) ein.

Die Herstellung der erfindungsgemäßen Curmarinderivate der Formel (4a) für Z = OR⁴⁵ im Sinne einer Knoevenagel-Kondensation und anschließender Cyclisierung wird beispielhaft durch das folgende Formelschema dargestellt:

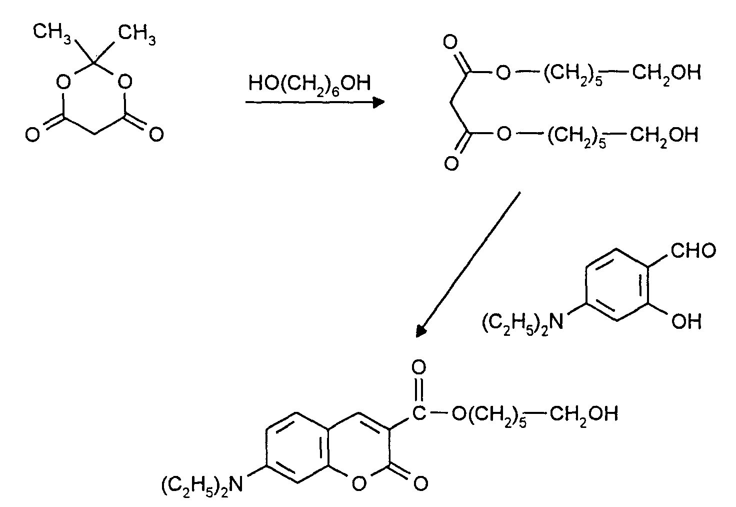

Hierbei wird zunächst Bis-(6-hydroxyhexyl)-malonat durch Umsetzung von der Meldrum's-Säure und 1,6-Hexandiol in Gegenwart katalytischer Mengen von p-Toluolsulfonsäure unter Aceton- und Wasseraustritt hergestellt. Anschließend versetzt man das Bis-(6-hydroxyhexyl)-malonat mit 4-Diethylaminosalicyladehyd in Gegenwart katalytischer Mengen Piperidinacetat unter Bildung des erwünschten 3-(6-Hydroxyhexoxycarbonyl)-7-diethylamino-cumarins.

Die Herstellung der erfindungsgemäßen Cumarinderivate der Formel (4a) für Z = NR⁴⁶R⁴⁷ wird beispielhaft durch das folgende Formelschema dargestellt:

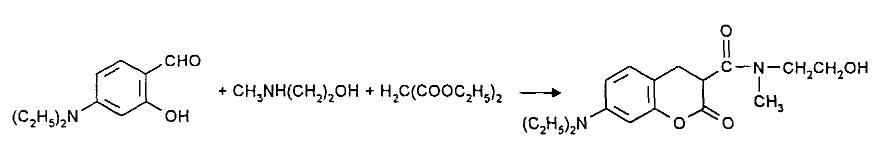

Hierbei wird 4-Diethylamino-salicylaldehyd in Gegenwart katalytischer Mengen Piperidinacetat mit Diethylmalonat und 2-(Methylamino)-ethanol umgesetzt. Man erhält das erwünschte 3-[(N-Hydroxyethyl-N-methyl)aminocarbonyl]-7-diethylamino-cumarin.

Die Ausgangsprodukte der Formeln (I), (II), (III), (IV), (V) und (VI) sind allgemein bekannte Verbindungen der organischen Chemie.

Die folgenden 1,8-Naphthalimid-Derivate der Formel (6a), (7a-1) und (7b-1) sind ebenfalls neu: 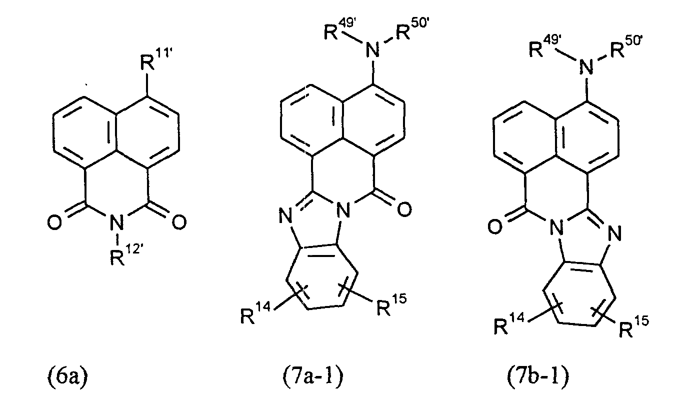 worin
- R^{11'}: für Wasserstoff, Halogen, Nitro, C₁-C₄-Alkoxycarbonyl, C₁-C₄-Acyl, C₈-C₂₄-Aralkenyl, unsubstituiertes Amino oder für ein- oder zweifach, gleich oder verschieden durch C₁-C₃₀-Alkyl, C₆-C₁₈-Aryl, C₇-C₂₄-Aralkyl substituiertes Amino steht, wobei die oben genannten Kohlenstoffketten selbst durch Hydroxy und/oder Carboxy substituiert sein können,
- R^{11'}: weiterhin für Morpholinyl, Piperidinyl, Pyrrolidinyl oder Piperazinyl steht, die einen oder zwei Substituenten ausgewählt aus Methyl, Ethyl und/oder Phenyl tragen können,
- R^{12'}: für Wasserstoff oder C₁-C₃₀-Alkyl, C₁-C₃₀-Alkoxy, C₆-C₁₈-Aryl, C₇-C₂₄-Aralkyl steht, welche ein- oder mehrfach durch Hydroxy und/oder Carboxy substituiert sein können,
und mindestens einer der Reste R^{11'} oder R^{12'} über eine Hydroxy- oder Carboxygruppe verfügt,
- R^{49'} und R^{50'}: unabhängig voneinander für C₁-C₃₀-Alkyl, C₆-C₁₈-Aryl, C₇-C₂₄-Aralkyl stehen, die durch Hydroxy substituiert sein können, wobei mindestens einer der Reste R^{49'} oder R^{50'} über eine Hydroxy- oder Carboxygruppe verfügt.
- R^{49'} und R^{50'}: weiterhin gemeinsam mit dem Stickstoffatom, an das sie gebunden sind, für Morpholinyl, Piperidyl, Pyrolidyl oder Piperazinyl stehen, die einen oder zwei gleich oder verschiedene Substituenten ausgewählt aus Methyl, Ethyl und Phenyl tragen können und über mindestens eine Hydroxy- oder Carboxygruppe verfügen,
- R¹⁴ und R¹⁵: unabhängig voneinander Wasserstoff, Halogen, Cyano, Nitro, C₁-C₃₀-Alkyl, C₁-C₃₀-Alkoxy, C₆-C₁₈-Aryl, C₇-C₂₄-Aralkyl, C₁-C₁₂-Alkoxycarbonyl, C₂-C₁₂-Acyl oder C₁-C₆-(Di)-Alkylamino bedeuten,

Die erfindungsgemäßen 1,8-Naphthalimid-Derivate der Formeln (6a), (7a-1) und (7b-1), tragen mindestens eine Hydroxy- oder eine Carboxygruppe, vorzugsweise eine Hydroxygruppe, über die sie an Polymerseitenketten chemisch gebunden werden können.

In der oben genannten Formel (6a) steht
- R^{11'}: vorzugsweise für Wasserstoff, Chlor, Brom, Nitro, Methoxycarbonyl, Ethoxycarbonyl, n- oder iso-Propoxycarbonyl, Methylcarbonyl, Ethylcarbonyl, n- oder iso-Propylcarbonyl, Amino, für Amino, welches ein- oder zweifach, gleich oder verschieden durch C₁-C₁₅-Alkyl, jeweils gegebenenfalls durch Methyl und/oder Ethyl substituiertes Phenyl, Naphthyl, Phenyl-C₁-C₄-alkyl oder Naphthenyl-C₁-C₄-alkyl substituiert ist, wobei die oben genannten Kohlenstoffketten selbst durch Hydroxy substituiert sein können, R^{11'} weiterhin vorzugsweise für Morpholinyl, Piperidinyl, Pyrrolidinyl oder Piperazinyl steht, die einen oder zwei Substituenten ausgewählt aus Hydroxy, Methyl, Ethyl und/oder Phenyl tragen können.
- R^{12'}: steht vorzugsweise für C₁-C₁₅-Alkyl, Phenyl oder Phenyl-C₁-C₆-alkyl, welche durch Hydroxy und die aromatischen Ringen zusätzlich noch durch Halogen, C₁-C₆-Alkyl und/oder C₁-C₆-Alkoxy substituiert sein können.
- R^{11'}: steht insbesondere für Chlor, Brom, Amino, welches ein- oder zweifach, gleich oder verschieden durch C₁-C₁₅-Alkyl substituiert ist, Morpholinyl, Piperidinyl, Pyrrolidinyl oder Piperazinyl, wobei die oben genannten Kohlenstoffketten selbst durch Hydroxy substituiert sein können.
- R^{12'}: steht insbesondere für C₁-C₁₂-Alkyl, gegebenenfalls durch Halogen, C₁-C₆-Alkyl, C₁-C₆-Alkoxy substituiertes Phenyl, die eine Hydroxygruppe tragen können.

Mindestens einer der Reste R^{11'} und R^{12'} muß über eine Hydroxygruppe verfügen.
- R^{49'} und R^{50'}: in den Formeln (7a-1) und (7b-1) stehen vorzugsweise unabhängig voneinander für C₁-C₁₅-Alkyl, Phenyl, Phenyl-C₁-C₆-alkyl, Naphthyl, Naphthyl-C₁-C₆-alkyl, die einfach oder mehrfach, insbesondere einfach durch Hydroxy substituiert sein können, wobei mindestens einer der Reste R^{49'} oder R^{50'} über eine Hydroxygruppe verfügt.
- R^{49'} und R^{50'}: stehen weiterhin gemeinsam mit dem Stickstoffatom, an das sie gebunden sind, vorzugsweise für Piperidinyl oder Piperazinyl, die einen oder zwei gleich oder verschiedene Substituenten ausgewählt aus Methyl, Ethyl und Phenyl tragen können und über mindestens eine Hydroxy- oder Carboxygruppe verfügen,
- R¹⁴ und R¹⁵: in den Formeln (7a-1) und (7b-1) stehen vorzugsweise unabhängig voneinander für Wasserstoff, Halogen, C₁-C₁₅-Alkyl, C₁-C₁₅-Alkoxy, C₁-C₄-Alkoxycarbonyl, C₁-C₄-Acyl- oder Di(C₁-C₆-Alkyl)amino, jeweils durch Methyl und/oder Ethyl substituiertes Phenyl, Phenyl-C₁-C₆-alkyl, Naphthyl oder Naphthyl-C₁-C₆-alkyl.
- R^{49'} und R^{50'}: stehen insbesondere für C₁-C₁₂-Alkyl, Phenyl, Phenyl-C₁-C₆-alkyl, die durch eine Hydroxygruppe substituiert sein können, wobei mindestens einer der Reste R^{49'} oder R^{50'} über eine Hydroxygruppe verfügt.
- R¹⁴ und R¹⁵: stehen insbesondere für Wasserstoff, Halogen, C₁-C₁₂-Alkyl, C₁-C₁₂-Alkoxy, Di(C₁-C₆-alkyl)amino, Phenyl.

Die Zahl der Hydroxygruppen und/oder Carboxygruppen beträgt mindestens eine, es können jedoch auch bis zu vier Hydroxy- und/oder Carboxygruppen sein.

Die aromatischen Ringe in den oben genannten Resten können einfach bis fünffach, vorzugsweise einfach bis dreifach, gleich oder verschieden durch die genannten Substituenten substituiert sein.

Die aliphatischen Kohlenstoffketten, wie z.B. Alkyl, Alkoxy, Alkylamino, Aralkyl, in R⁴³, R⁴⁴, R⁴⁵, R⁴⁶ und R⁴⁷, R^{11'}, R^{12'}, R^{45'}, R^{50'} können durch eines oder mehrere, vorzugsweise ein oder zwei Heteroatome ausgewählt aus Sauerstoff, Stickstoff und Schwefel und/oder durch ein oder mehrere, vorzugsweise ein oder zwei Phenylenringe, die durch C₁-C₄-Alkyl und/oder Halogen substituiert sein können, unterbrochen sein.

Ein Verfahren zur Herstellung von neuen 1,8-Naphthalimid-Derivaten der Formel (6a) 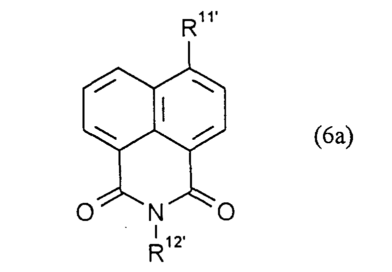 worin
- R^{11'} und R^{12'}: die obengenannte Bedeutung haben,
ist dadurch gekennzeichnet, daß man entweder
a) ein 1,8-Naphthalsäureanhydrid der Formel (VII) und ein primäres Amin der Formel (VIII), 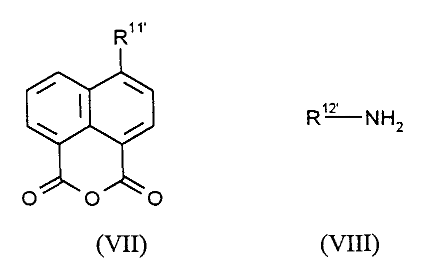 bei 50 bis 250°C, vorzugsweise 90 bis 140°C, gegebenenfalls in Gegenwart von Verdünnungsmitteln wie beispielsweise Essigsäure, Butanol, Chlorbenzol, Toluol oder Xylol miteinander umsetzt oder
b) im Falle, daß R^{11'} in Formel (6a) unsubstituiertes, ein- oder zweifach substituiertes Amino oder cyclisches Amino bedeutet, ein 1,8-Naphthalimid der Formel (6a-1) 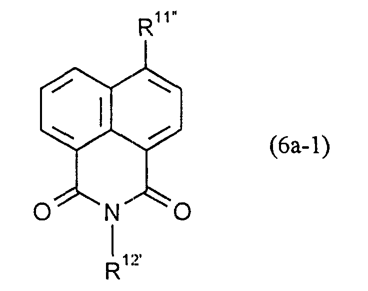 worin
   - R^{11"}: für Halogen, vorzugsweise Chlor, Brom oder Iod, oder Nitro steht,
   welches aus einem 1,8-Naphthalsäureanhydrid der Formel (VIIa) und einem primären Amin der Formel (VIII) 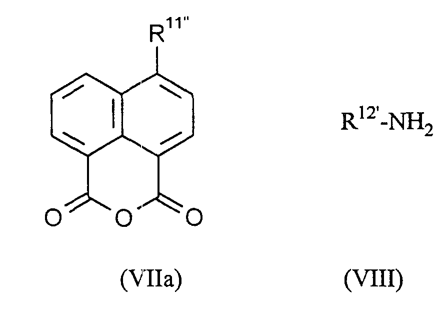 worin R^{11"} und R^{12'} die oben genannte Bedeutung haben,
bei Temperaturen von 50 bis 250°C, vorzugsweise 90 bis 140°C, gegebenenfalls in Gegenwart von Verdünnungsmitteln wie beispielsweise Essigsäure, Butanol, Chlorbenzol, Toluol oder Xylol hergestellt wird,
und die so erhaltene Verbindung der Formel (6a-1) anschließend mit einem primären oder sekundären Amin oder Piperidin, Morpholin, Pyrolidin oder Piperazin, welche einen oder zwei Substituenten ausgewählt aus Methyl, Ethyl und/oder Phenyl tragen können, oder mit einer wäßrigen Ammoniaklösung gegebenenfalls in Gegenwart von Lösungsmitteln wie beispielsweise Methoxyethanol oder Butanol gegebenenfalls unter Katalyse von beispielsweise einem Kupfer(II)-Salz bei Temperaturen von 50 bis 250°C, vorzugsweise 100 bis 150°C umsetzt.

Ein Verfahren zur Herstellung von neuen 1,8-Naphthalimid-Derivaten der Formel (7a-1) und (7b-1) (Verfahren C), 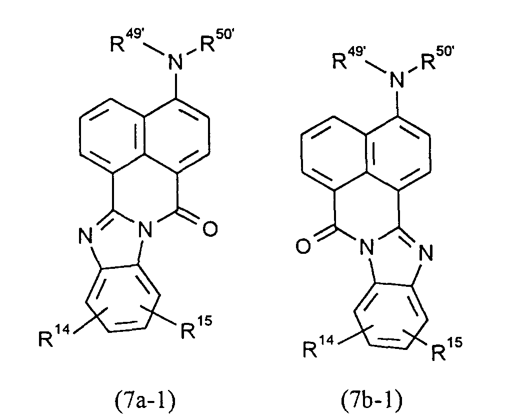 worin
- R¹⁴, R¹⁵, R^{49'} und R^{50'}: die obengenannte Bedeutung haben,
wobei man ein 1,8-Naphthalimid-Derivat der Formel (IXa und b), 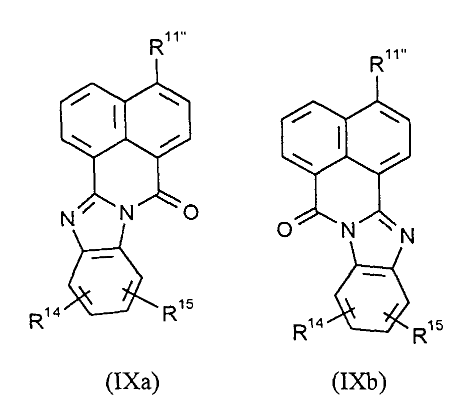 worin
- R¹⁴, R¹⁵ und R^{11"}: den obigen Bedeutungsumfang haben,
aus einem 1,8-Naphthalsäureanhydrid der Formel (VIIa) 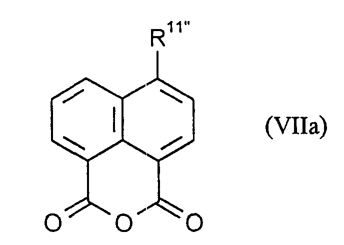 worin R^{11"} die oben genannte Bedeutung hat,
und einem o-Phenylendiamin der Formel (X) 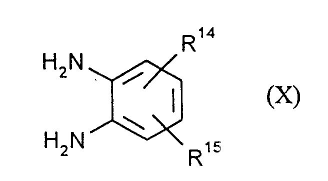 worin R¹⁴ und R¹⁵ die oben genannten Bedeutungen haben,
bei Temperaturen von 50 bis 250°C, vorzugsweise 90 bis 140°C, gegebenenfalls in Gegenwart von Lösungsmitteln wie beispielsweise Essigsäure, Butanol, Chlorbenzol, Toluol oder Xylol herstellt und das 1,8-Naphthalimid-Derivat der Formel (IXa und b) anschließend mit einem sekundären Amin der Formel (XI), 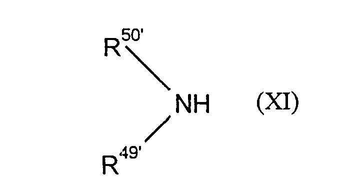 worin R^{49'} und R^{50'} die oben genannte Bedeutung haben,
unter Katalyse von beispielsweise einem Kupfer(II)-Salz bei Temperaturen von 50 bis 250°C, vorzugsweise 100 bis 150°C, gegebenenfalls in Gegenwart eines Lösungsmittels wie beispielsweise Methoxyethanol oder Butanol, umsetzt.

Bei der Durchführung des erfindungsgemäßen Verfahrens a) zur Herstellung der 1,8-Naphthalimid-Derivate der Formel (6a) setzt man im allgemeinen pro Mol Verbindung der Formel (VII) 1 bis 1,8 Mol, vorzugsweise 1,2 bis 1,4 Mol primäres Amin der Formel (VIII) ein.

Bei der Durchführung des erfindungsgemäßen Verfahrens b) zur Herstellung der 1,8-Naphthalimid-Derivate der Formel (6a-1) setzt man im allgemeinen pro Mol Verbindung der Formel (VIIa) 1 bis 1,8 Mol, vorzugsweise 1,2 bis 1,4 Mol des primären Amins der Formel (VIII) und pro Mol Verbindung der Formel (6a-1) 1,2 bis 5 Mol, vorzugsweise 2 bis 2,5 Mol des entsprechenden primären, sekundären oder cyclischen Amins.

Die Herstellung der erfindungsgemäßen 1,8-Naphthalimid-Derivate der Formel (6a), Verfahren (a) und (b) wird beispielhalft durch das folgende Formelschema dargestellt:

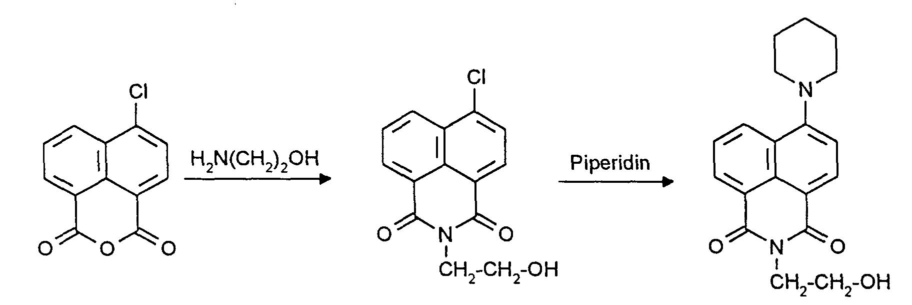

Hierbei wird zunächst das 4-Chlor-N-hydroxyethyl-1,8-naphthalimid durch Umsetzung von 4-Chlor-naphthalsäureanhydrid und 2-Aminoethanol hergestellt. Anschließend versetzt man das 4-Chlor-N-hydroxyethyl-1,8-naphthalimid mit Piperidin in Gegenwart katalytischer Menge von einem Kupfer(II)-Salz unter Bildung des erwünschten N-Hydroxyethyl-4-piperidino-1,8-naphthalimids.

Bei der Durchführung des erfindungsgemäßen Verfahrens C) zur Herstellung der 1,8-Naphthalimid-Derivate der Formel (7a-1) und (7b-1) setzt man im allgemeinen pro Mol Verbindung der Formel (VIIa) 1 bis 1,8 Mol, vorzugsweise 1,2 bis 1,4 Mol des o-Phenylendiamins der Formel (X) und pro Mol Verbindung (IXa-b) 1,2 bis 5 Mol, vorzugsweise 2 bis 2,5 Mol des sekundären Amins der Formel (XI) ein.

Die Herstellung der erfindungsgemäßen 1,8-Naphthalimid-Derivate der Formel (7a-1 und 7b-1) wird beispielhaft durch das folgende Formelschema dargestellt:

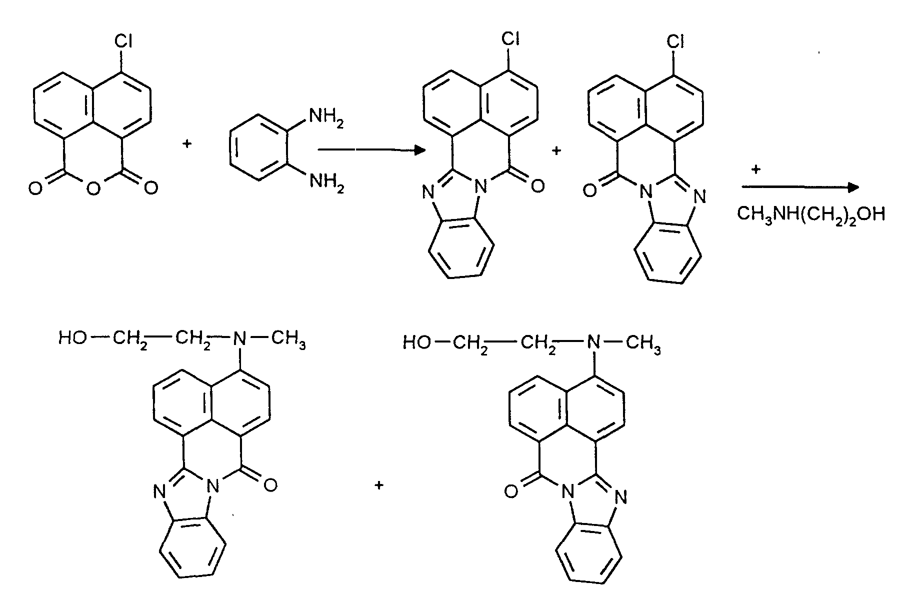

Hierbei wird zunächst das 4/5-Chlor-1,8-naphthoylen-1',2'-benzimidazol, welches als ein Isomerengemisch (ca. 3:1) anfällt, durch Umsetzung von 4-Chlornaphthalsäureanhydrid und o-Phenylendiamin hergestellt. Anschließend versetzt man das 4/5-Chlor-1,8-naphthoylen-1',2'-benzimidazol mit 2-(Methylamino)-ethanol in Gegenwart katalytischer Menge von einem Kupfer(II)-Salz unter Bildung des erwünschten 4/5-(N-Methyl-N-hydroxyethyl)amino-1,8-naphthoylen-1',2'-benzimidazols.

Die Ausgangsprodukte der Formeln (VII), (VIII), (VIIa), (X) und (XI) zur Herstellung der erfindungsgemäßen Verbindungen (7 a-1 und 7 b-1) sind allgemein bekannte Verbindungen der organischen Chemie.

Die zur Herstellung von erfindungsgemäßen Copolymerisaten weiterhin benötigten Styrol- und Acrylsäure-Derivate der Formeln (22) und (23) sind allgemein bekannte Verbindungen.

Die erfindungsgemäßen Copolymerisate zeichnen sich durch ihre lumineszierenden Eigenschaften und Filmbildungsvermögen aus und lassen sich durch Gießen, Rakeln oder Spin-coating auf geeignete Unterlagen aufbringen. Die Produkte zeigen sowohl in Lösungen als auch als Filme Photolumineszenz bei Bestrahlung. Die Copolymerisate der vorliegenden Erfindung sind zum Aufbau von elektrolumineszierenden Anzeigen geeignet.

Die Erfindung betrifft daher die Verwendung der oben beschriebenen Copolymerisate in der lumineszierenden Schicht einer elektrolumineszierenden Anordnung, die dadurch gekennzeichnet ist,
daß sich eine elektrolumineszierende Schicht zwischen zwei Elektroden befindet,
daß mindestens eine der beiden Elektroden im sichtbaren Spektralbereich transparent ist,
daß beim Anlegen einer Gleichspannung im Bereich von 0,1 bis 100 Volt Licht im Frequenzbereich von 200 bis 2000 nm emittiert wird,
daß zwischen der elektrolumineszierenden Schicht und den Elektroden zusätzlich eine oder mehrere Zwischenschichten angeordnet sein können.

Diese Zwischenschichten sind aus der Literatur bekannt (vergl. Appl. Phys. Lett., 57, 531 (1990)) und werden dort als HTL (hole transport layer) und als ETL (electron transport layer) bezeichnet. Der Zweck solcher Zwischenschichten liegt u.a. in der Erhöhung der Elektrolumineszenzintensität.

Die erfindungsgemäßen elektrolumineszierenden Polymere können auch als eine Mischung miteinander oder mit mindestens einem weiteren Material in der elektrolumineszierenden Schicht eingesetzt werden. Bei diesem weiteren Material kann es sich um inerte Binder, ladungsträgertransportierende Substanzen wie in EP-A 532 798 oder EP-A 564 224 beschrieben, oder Mischungen aus inerten Bindern und ladungsträgertransportierenden Substanzen handeln.

Die Mischungen aus den erfindungsgemäßen Polymeren und einem weiteren Material zeichnen sich u.a. dadurch aus, daß sie filmbildend sind und durch Gießen, Rakeln oder Spin-coating großflächig auf geeignete Substrate aufgebracht werden können. Als Substrat sind transparente Träger wie Glas oder Kunststoff-Folien (z.B. Polyester, wie Polyethylenterephthalat oder Polyethylennaphthalat, Polycarbonat, Polysulfon, Polyimid-Folien) geeignet.

Bei dem inerten Binder handelt es sich vorzugsweise um lösliche transparente Polymere wie z.B. Polycarbonate, Polystyrol, Polyvinylpyridin, Polymethylphenylsiloxan und Copolymere des Polystyrols wie SAN, Polysulfone, Polyacrylate, Polyvinylcarbazol, Vinylacetat- und Vinylalkoholpolymere und -copolymere.

### Beispiele

### Beispiel 1

1. Herstellung des 3-(6-Hydroxyhexoxycarbonyl)-7-diethylamino-cumarins, Formel (24) im Reaktionsschema
   Eine Lösung von Bis-(6-hydroxyhexyl)-malonat in 1,6-Hexandiol wird beim Erhitzen einer Mischung aus 21,6 g (0,15 mol) Meldrum's-Säure, 59 g (0,50 mol), 1,6-Hexandiol und 0,28 g (1,5 mmol) p-Toluolsulfonsäuremonohydrat für 2 h bei 140°C dargestellt.
   Anschließend versetzt man die resultierende Lösung mit 26,0 g (0,135 mol) 4-Diethylamino-salicylaldehyd, 0,7 ml Piperidin und 0,1 ml Essigsäure. Die Reaktionsmischung wird 3 h bei 110°C gerührt und nach Abkühlung mit 300 ml Wasser versetzt. Man extrahiert die Suspension mit Dichlormethan. Die organische Phase wird eingeengt und der Rückstand aus Toluol umkristallisiert.
   Man erhält 40,2 g (83 % der Theorie) 3-(6-Hydroxyhexoxycarbonyl)-7-diethylamino-cumarin als gelbe Kristalle mit einem Schmelzpunkt von 85 bis 86°C.
2. Herstellung des 3-(6-Methacryloxyhexoxycarbonyl)-7-diethylamino-cumarin, Formel (26) im Reaktionsschema
   Zu einer Lösung von 16,3 g (0,045 Mol) 3-(6-Hydroxyhexoxycarbonyl)-7-diethylamino-cumarin (24) und 10,0 g (0,10 Mol) frisch destilliertem Triethylamin in 50 ml trockenem Tetrahydrofuran tropft man unter Rühren und Eiswasser-Kühlung 8,36 g (0,08 Mol) Methacryloylchlorid (25). Die Reaktionsmischung wird 5 h bei Raumtemperatur gerührt. Anschließend wird die Reaktionsmischung mit 200 ml Wasser und 200 ml Methylenchlorid behandelt. Nach der Phasentrennung wird die wäßrige Phase noch zweimal mit je 100 ml Methylenchlorid extrahiert. Die vereinigten organischen Auszüge werden neutral gewaschen und mit Natriumsulfat getrocknet. Nach Abdestillieren des Lösungsmittels im Vakuum wird der Rückstand durch eine kurze Kieselgelsäule mit Diethylether als Laufmittel adsorptiv filtriert. Nach Abdestillieren des Lösungsmittels erhält man 17,6 g (92 % der Theorie) blaßgelbes Öl.
3. Herstellung des Copolymerisats gemäß Formel (28) im Reaktionsschema mit x = 13 Mol-%, y = 87 Mol-%
   Eine Lösung von 5,0 g (0,012 Mol) 3-(6-Methacryloxyhexoxycarbonyl)-7-diethylamino-cumarin (26), 10,0 g (0,078 Mol) n-Butylacrylat (27) und 0,15 g (0,91 mMol) AIBN in 80 ml trockenem Chlorbenzol wird unter Vakuum entgast und anschließend unter Stickstoff bei 100°C 3 h gerührt. Die Polymerisationsmischung wird dann mit 0,15 g (0,91 mMol) AIBN in drei Portionen innerhalb 3 h nachgestartet. Die Lösung wird anschließend in 100 ml Methanol unter Rühren zugetropft und dann die Suspension abgesaugt. Das Rohprodukt wird noch zweimal aus Methylenchlorid/Methanol-Mischung gefällt. Ausbeute 12,7 g (85 % der Theorie).

### Beispiel 2

1. Herstellung vom N-(m/p-Vinylbenzyl)-phenothiazin, Formel (31)
   Zu einer Mischung von 20 g (0,10 Mol) Phenothiazin (29), 18,4 g (0,12 Mol) m/p-Vinylbenzylchlorid (30) und 3,39 g (0,01 Mol) Tributylammoniumhydrogensulfit in 100 ml Isobutylmethylketon wird unter Rühren bei 0°C 100 ml 45 %ige Natronlauge zugefügt. Das Reaktionsgemisch wird bei Raumtemperatur 4 h kräftig gerührt und dann mit 100 ml Wasser und 150 ml Isobutylmethylketon verdünnt. Nach der Phasentrennung wird die organische Lösung neutral gewaschen und mit Natriumsulphat getrocknet. Anschließend wird die Lösung durch eine kurze Kieselgelsäule mit Diethylether als Laufmittel adsorptiv filtriert. Nach Entfernung des Lösungsmittels erhält man 30 g (95 % der Theorie) blaßgelbes Öl.
2. Herstellung des Copolymerisats gemäß Formel (33), mit x = 28 Mol-%, y = 72 Mol-%
   In Analogie zu dem im Beispiel 1 beschriebenen Verfahren läßt sich aus 5,0 g (0,016 Mol) N-(m/p-Vinylbenzyl)-phenothiazin (31), 5,0 g (0,042 Mol) m/p-Methylstyrol (32) und insgesamt 0,15 (0,91 mMol) AIBN mit Toluol als Lösungsmittel 8,0 g (80 % der Theorie) des Copolymerisats (33) herstellen.

### Beispiel 3

1. 4/5-(N-Methyl-N-hydroxyethyl)amino-1,8-napthoylen-1',2'-benzimidazol
   erhält man analog Beispiel 5, Punkt 1, aus 4/5-Chlor-1,8-naphthoylen-1',2'-benzimidazol in 82%-iger Ausbeute als rotbraune Kristalle vom Schmelzpunkt 168-169°C.
2. Herstellung des 4/5-(N-Methyl-N-methacryloxyethyl)amino-1,8-naphthoylen-1',2'-benzimidazols, Formel (35)
   In Analogie zu dem im Beispiel 1 beschriebenen Verfahren wird ausgehend von 5,83 g (0,017 Mol) 4/5-(N-Methyl-N-hydroxyethyl)amino-1,8-naphthoylen-1'2'-benzimidazol (34) und 3,24 (0,031 Mol) Methacryloylchlorid (25) 6,3 g (90 % der Theorie) des Methacrylats (35) hergestellt. Bei der Aufarbeitung wird die Reaktionsmischung mit Wasser behandelt und die resultierte Suspension abgesaugt. Das Rohprodukt wird aus Toluol bei tiefer Temperatur umkristallisiert.
3. Herstellung des Copolymerisats gemäß Formel (37), worin x = 55 Mol-%, y = 45 Mol-%
   In Analogie zu dem im Beispiel 1 beschriebenen Verfahren läßt sich aus 4,0 g (9,7 mMol) 4/5-(N-Methyl-N-methacryloxyethyl)amino-1,8-naphthoylen-1'2'-benzimidazoles (35), 1,5 g (7,8 mMol) N-Vinylcarbazol (36) und insgesamt 50 mg (0,30 mMol) AIBN mit Chlorbenzol als Lösungsmittel 4,8 g (87 % der Theorie) des Copolymerisats (37) herstellen.

### Vergleichs Beispiel 4

### 1. N-Isoamyl-4-(N'-Methyl-N'-hydroxyethyl)amino-1,8-napthalamid

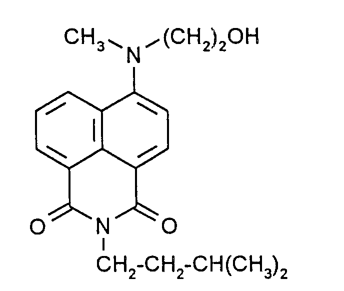

erhält man analog Beispiel 5, Punkt 1, aus 4-Chlor-N-isoamyl-1,8-naphthalimid und 2-(Methylamino)-ethanol in 71%-iger Ausbeute als gelbe bis braune Kristalle vom Schmelzpunkt 117-118°C.

### 2. Herstellung des N-Isoamyl-4-(N'-Methyl-N'-m/p-vinylbenzyloxyethyl)amino-1,8-naphthalimids (39)

Zu einer gerührten Lösung von 4,0 g (0,036 Mol) Kalium-tert-butylat in 40 ml trockenem Tetrahydrofuran wird unter Stickstoff bei 5°C eine Lösung von 10,2 g (0,03 Mol) N-Isoamyl-4-(N'-Methyl-N'-hydroxyethyl)amino-1,8-naphthalimid (38) in 30 ml trockenem Tetrahydrofuran zugetropft.
Das Gemisch wird noch 5 h bei Raumtemperatur gerührt. Anschließend wird 5,0 g (0,033 Mol) m/p-Vinylbenzylchlorid (30) zu der rotbraun verfärbten Lösung bei Raumtemperatur zugetropft. Nach 3 h wird die Reaktionsmischung mit 200 ml Wasser und 300 ml Methylenchlorid behandelt.
Nach der Phasentrennung wird die wäßrige Phase noch zweimal mit je 100 ml Methylenchlorid extrahiert. Die vereinigten organischen Auszüge werden neutral gewaschen und mit Natriumsulfat getrocknet. Nach Abdestillieren des Lösungsmittels im Vakuum wird der Rückstand durch eine kurze Kieselgelsäule mit Diisopropylether als Laufmittel adsorptiv filtriert, wobei ein Vorlauf mit geringer Menge von m/p-Vinylbenzylchlorid entfernt wird. Nach Abdestillieren des Lösungsmittels erhält man 9,6 g (70 % der Theorie) gelbes Öl.

### 3. Herstellung des Homopolymerisats gemäß Formel (40)

In Analogie zu dem im Beispiel 1 beschriebenen Verfahren läßt sich aus 3,0 g (6,6 mMol) N-Isoamyl-4-(N'-Methyl-N'-m/p-vinylbenzyl-oxyethyl)-amino-1,8-naphthalimids (39) und insgesamt 30 mg (0,18 mMol) AIBN mit Toluol als Lösungsmittel 2,3 g (77 % der Theorie) des Homopolymerisats (40) herstellen.

### 4. Herstellung einer elektrolumineszierenden Anordnung

ITO beschichtetes Glas (hergestellt von der Firma Balzers) wird in 20 x 30 mm große Substrate geschnitten und gereinigt. Dabei werden folgende Schritte sukzessiv durchgeführt:
1) 15 min mit dest. Wasser und Falterol im Ultraschallbad spülen,
2) 2 x 15 min mit jeweils frischem dest. Wasser im Ultraschallbad spülen,
3) 15 min mit Ethanol im Ultraschallbad spülen,
4) 2 x 15 min mit jeweils frischem Aceton im Ultraschallbad spülen,
5) Trocknen auf fusselfreien Linsentüchern.

Eine 1 %ige Lösung vom Polymer gemäß Formel (40) (Beispiel 4) in 1,2-Dichlorethan wird gefiltert (0,2 µm-Filter, Firma Sartorius). Die gefilterte Lösung wird mit einer Lackschleuder bei 1000 U/min auf dem ITO-Glas verteilt. Die Dicke des trockenen Films beträgt 110 nm und der Ra-Wert der Oberfläche beträgt 5 nm (Stylusprofilometer Alpha-Step 200 der Firma Tencor Inst.).

Der so hergestellte Film wird anschließend mit Al-Elektroden bedampft. Dazu werden mit Hilfe einer Lochmaske isolierte Al-Punkte mit einem Durchmesser von 3 mm auf den Film gedampft. Während des Aufdampfens herrscht in einer Aufdampfapparatur (Leybold) ein Druck unter 10⁻⁵ mbar.

Die ITO-Schicht und die Al-Elektrode wird über elektrische Zuführung mit einer Spannungsquelle verbunden. Beim Erhöhen der Spannung fließt ein elektrischer Strom durch die Anordnung und die beschriebene Schicht elektroluminesziert. Die Elektrolumineszenz liegt im gelb-grünen Spektralbereich und tritt bei positiv gepoltem ITO-Kontakt auf.

### Beispiel 5

### 1. Herstellung von N-Hydroxyethyl-4-piperidinyl-1,8-napthalimid

Ein Gemisch aus 20,0 g (0,073 mol) 4-Chlor-N-hydroxyethyl-1,8-naphthalimid, 25,8 g (0,30 mol) Piperidin, 2,0 g Kupfer(II)-sulfat und 200 ml Ethylenglykolmonomethylether wird 2 h unter Rückfluß gerührt. Die Lösung wird auf Raumtemperatur abgekühlt und anschließend mit 1 l Wasser versetzt. Man extrahiert die Suspension mit Dichlormethan. Die organische Phase wird eingeengt und der Rückstand aus Toluol umkristallisiert. Man erhält 16 g (68 % der Theorie) braune Kristalle vom Schmelzpunkt 152-153°C.

### 2. Herstellung des N-(m/p-Vinylbenzyloxyethyl)-4-piperidyl-1,8-naphthalimids, Formel (42)

In Analogie zu dem im Beispiel 4 beschriebenen Verfahren läßt sich aus 6,48 g (0,020 Mol) N-Hydroxyethyl-4-piperidyl-1,8-naphthalimid (41) und 3,67 g (0,024 Mol) m/p-Vinylbenzylchlorid (30) 6,4 g (73 % der Theorie) des N-(m/p-Vinylbenzyloxyethyl)-4-piperidyl-1,8-naphthalimids (42) herstellen.

### 3. Herstellung des Copolymerisats gemäß Formel (44) mit x = 1,2 Mol-% und y = 98,8 Mol-%

In Analogie zu dem im Beispiel 1 beschriebenen Verfahren läßt sich aus 0,16 g (0,36 mMol) des N-(m/p-Vinylbenzyloxyethyl)-4-piperidyl-1,8-naphthalimids (42), 3,0 g (28,8 mMol) Styrol (43) und insgesamt 30 mg (0,18 mMol) AIBN mit Toluol als Lösungsmittel 2,5 g (79 % der Theorie) des Copolymerisats (44) herstellen.

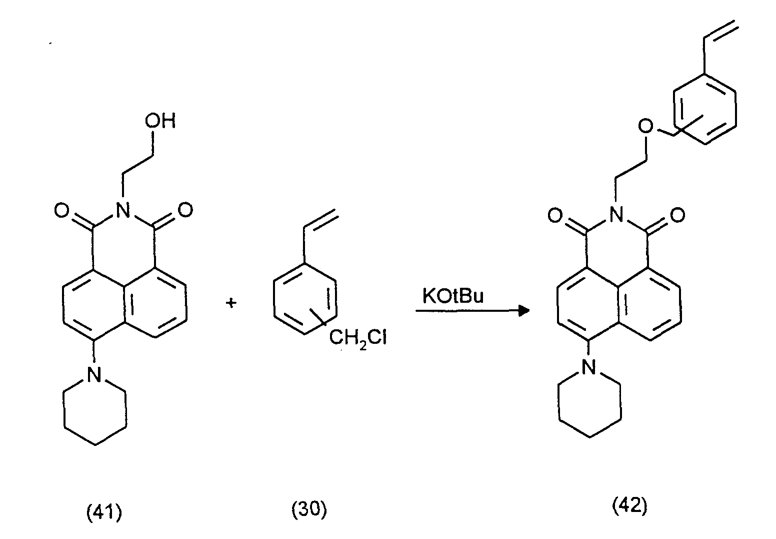

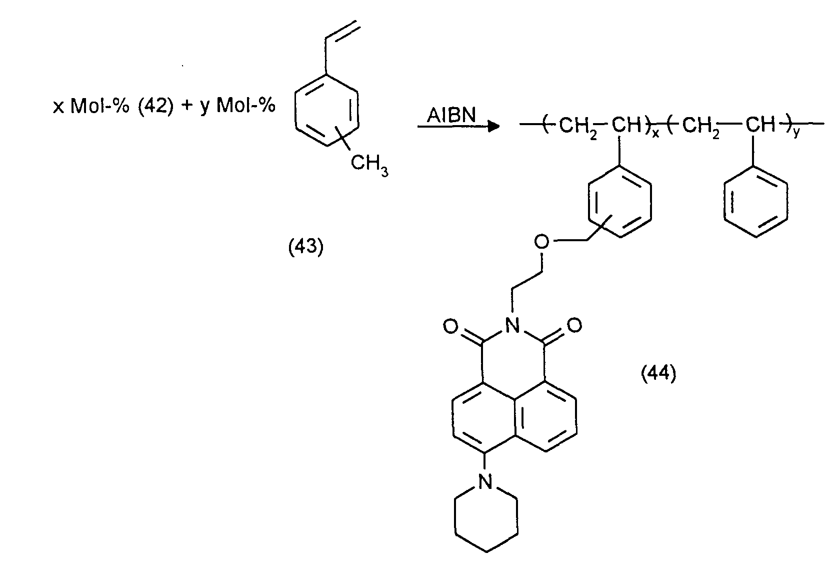

### Beispiel 6

### 1. Herstellung des Copolymerisats gemäß Formel (45) mit x = 1 Mol-% und y = 99 Mol-% In Analogie zu dem im Beispiel 1 beschriebenen Verfahren läßt sich aus 0,10 g (0,22 mMol) des N-Isoamyl-4-(N'-Methyl-N'-m/p-Vinylbenzyloxyethyl)amino-1,8-napthalimids (39), 4,20 g (21,8 mMol) N-Vinylcarbazol (36) und insgesamt 30 mg (0,18 mMol) AIBN mit Toluol als Lösungsmittel 4,15 g (96 % der Theorie) des Copolymerisats (45) herstellen.

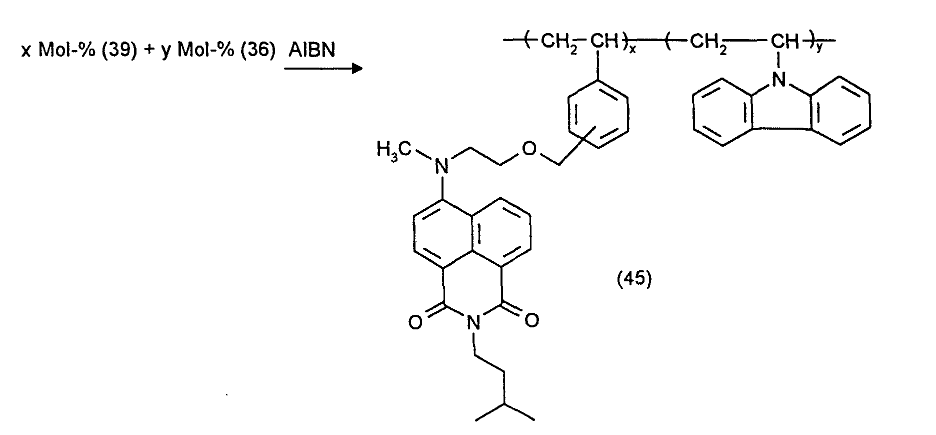

### 2. Herstellung einer elektrolumineszierenden Anordnung

Herstellungsverfahren wie beschrieben im Beispiel 4. Die Dicke des trockenen Films des Copolymerisats gemäß Formel (45) beträgt 144 nm und der Ra-Wert der Oberfläche beträgt 12 nm. Die Elektrolumineszenz liegt im gelb-grünen Spektralbereich.

## Patentansprüche

1. Copolymerisate, die mindestens zwei wiederkehrende Kettenbausteine der allgemeinen Formel (1) und/oder (2) und gegebenenfalls wiederkehrende Einheiten der allgemeinen Formel (3) enthalten 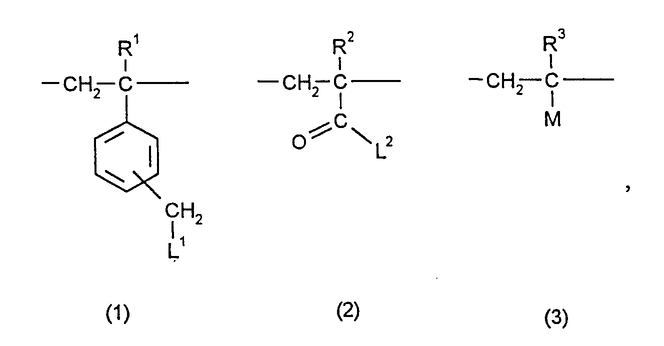 worin
R¹, R² und R³ unabhängig voneinander Wasserstoff oder C₁-C₆-Alkyl be- ' deuten,
M für CN oder C₁-C₃₀-Alkoxycarbonyl, C₁-C₃₀-(Di)Alkylaminocarbonyl, C₁-C₃₀-Alkylcarbonyl steht, die jeweils durch Hydroxy oder C₁-C₆-Alkoxycarbonyl substituiert sein können, weiterhin für Phenyl, Naphthyl, Anthracenyl, Pyridyl oder Carbazolyl steht, die jeweils durch Reste aus der Gruppe Halogen, Hydroxy, Silyl, C₁-C₃₀-Alkyl, C₆-C₁₈-Aryl, C₁-C₃₀-Alkoxy, C₁-C₃₀-Alkoxycarbonyl, C₁-C₃₀-Acyloxy und C₁-C₃₀-Alkylcarbonyl substituiert sein können,
L¹ und L² einen photolumineszierenden Rest bedeutet,
wobei der Anteil der Struktureinheiten der Formeln (1) und/oder (2) jeweils 0,5 bis 60 Mol-% und (3) 40 bis 99,5 Mol-% betragen und sich die Mol-%-Anteil zu 100 ergänzen.

2. Copolymerisate gemäß Anspruch 1, wobei
L¹ und L² unabhängig voneinander für einen photolumineszierenden Rest stehen, der auf dem Gerüst eines Fluoreszenzfarbstoffs basiert, der ausgewählt ist aus der Gruppe der Cumarine der Formel (4) 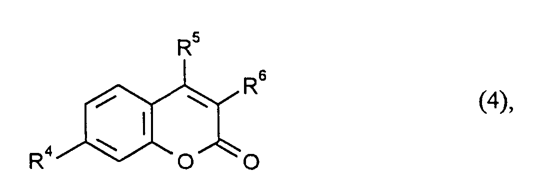
Pyrene der Formel (5) 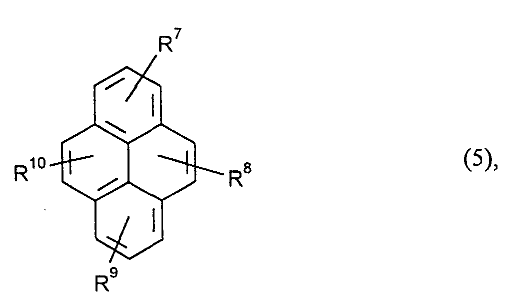
1,8-Naphthalimide der Formel (6) 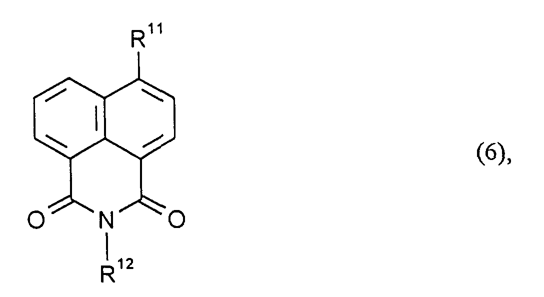
1,8-Naphthaloylen-1',2'-benzimidazole der Formel (7a) und (7b) 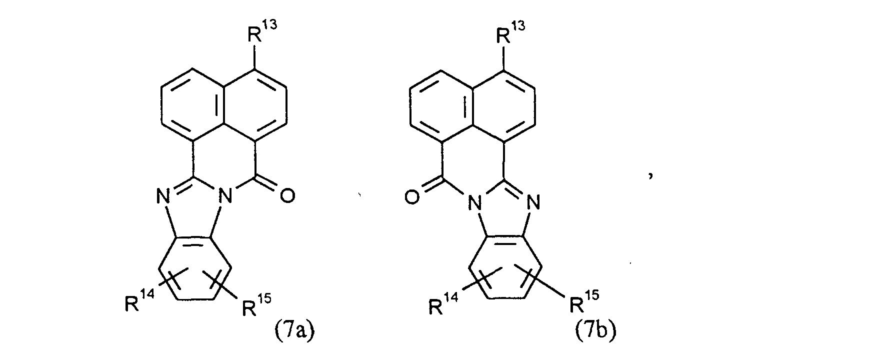
Phenothiazine oder Phenoxazine der Formel (8) 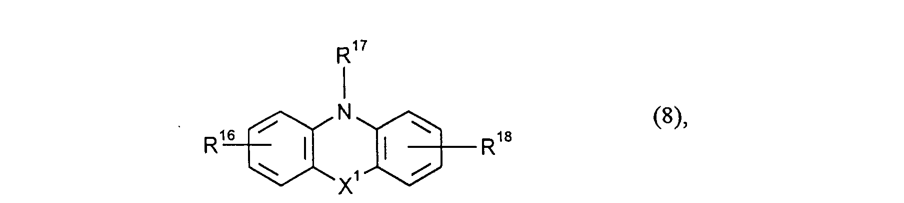 mit X¹ = 0 oder S,
Benzopyrone der Formel (9) 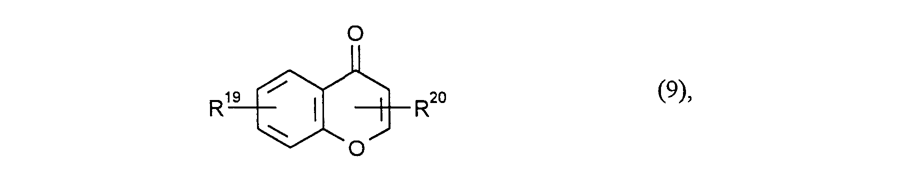
Carbazole, Fluorene, Dibenzothiophene und -furane der Formel (10) 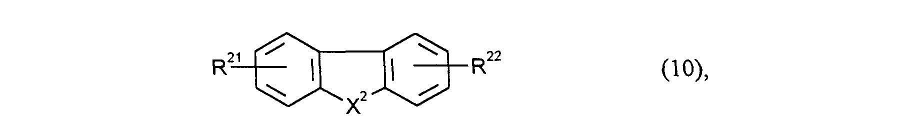 mit X² = NR²³, CH₂, S oder O, wobei R²³ für Wasserstoff oder C₁-C₆-Alkyl steht,
Oxazole, 1,3,4-Oxadiazole der Formel (11) 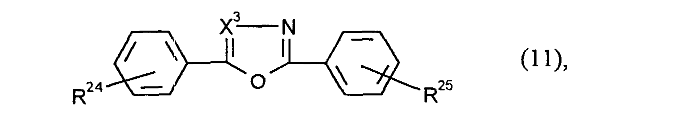 mit X³ = CH oder N
Benzochinoline der Formel (12) 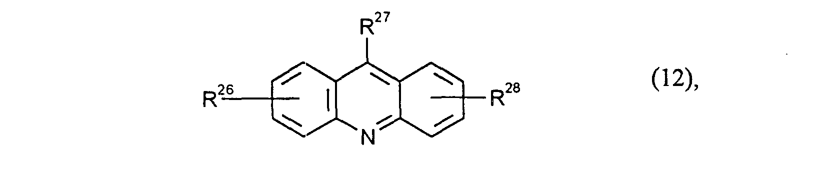
9,10-Bis-(Phenylethinyl)-Anthracene der Formel (13) 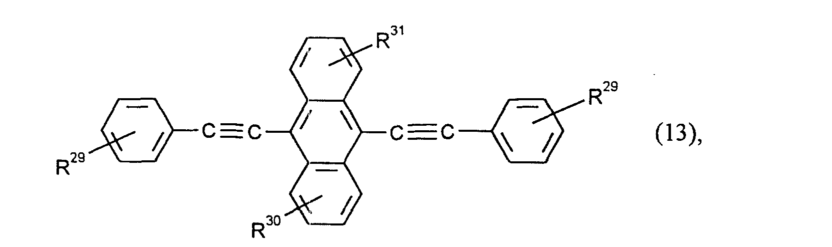
Fluorone der Formel (14) 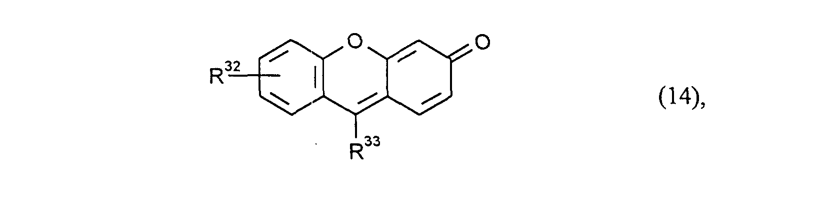
9,10-Diphenylanthracen der Formel (15) 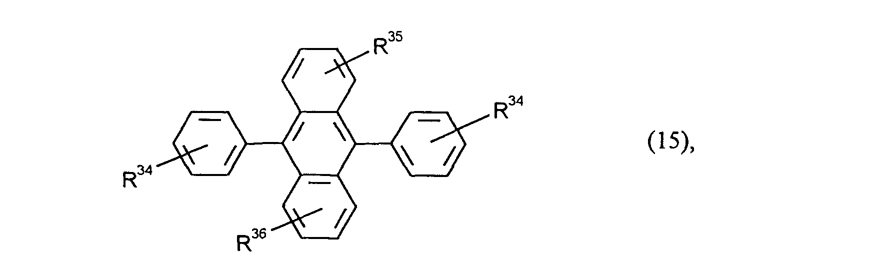
2-Styrylbenzazol der Formel (16) 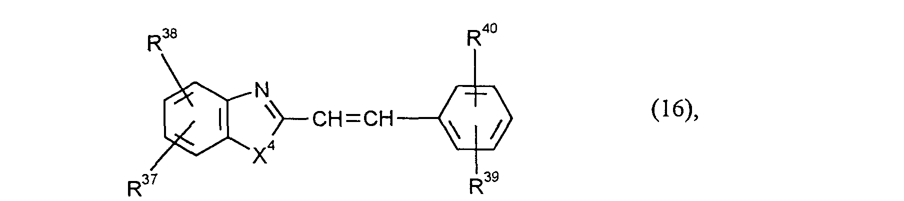 mit X⁴ = O, S, Se oder CH₂,
wobei
R⁴ für Wasserstoff, C₁-C₃₀-Alkyl, C₆-C₁₈-Aryl, C₇-C₂₄-Aralkyl oder C₁-C₃₀-Alkoxy oder für 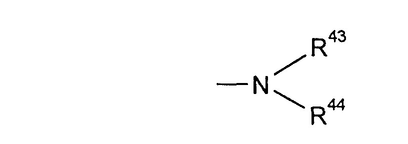 steht, wobei
R⁴³ und R⁴⁴ unabhängig voneinander für Wasserstoff, C₁-C₃₀-Alkyl, C₆-C₁₈-Aryl, C₇-C₂₄-Aralkyl steht, die jeweils durch Hydroxy, Amino, Carboxy oder C₁-C₄-Alkoxycarbonyl substituiert sein können, oder
R⁴³ und R⁴⁴ gemeinsam mit dem Stickstoff-Atom, an das sie gebunden sind, einen Morpholin-, Piperidin-, Pyrrolidin- oder Piperazinring, der einen oder zwei Substituenten aus der Gruppe Methyl, Ethyl und Phenyl tragen kann, bedeuten können,
R⁵ für Wasserstoff, Cyano, C₁-C₃₀-Alkyl, C₆-C₁₈-Aryl, C₇-C₂₄-Aralkyl, C₁-C₃₀-Alkoxy, C₂-C₁₂-Acyl, C₁-C₁₂-Alkoxycarbonyl, C₁-C₁₂-(Di)-Alkylaminocarbonyl steht,
R⁶ für Wasserstoff, Cyano, C₁-C₃₀-Alkyl, C₆-C₁₈-Aryl, C₇-C₂₄-Aralkyl, C₁-C₃₀-Alkoxy oder für 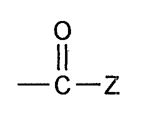 steht, wobei Z für eine Gruppe OR⁴⁵ oder 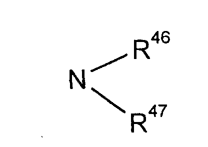 steht und
R⁴⁵,R⁴⁶ und R⁴⁷ unabhängig voneinander für C₁-C₃₀-Alkyl, C₆-C₁₈-Aryl oder C₇-C₂₄-Aralkyl stehen, wobei die aromatischen Ringe zusätzlich noch durch Halogen, C₁-C₆-Alkyl, C₁-C₆-Alkoxy substituiert sein können,
R⁷, R⁸ und R⁹ unabhängig voneinander Wasserstoff, C₁-C₃₀-Alkyl, C₆-C₁₈-Aryl, C₇-C₂₄-Aralkyl, C₁-C₃₀-Alkoxy, Cyano, C₂-C₁₂-Alkoxycarbonyl, C₁-C₁₂-(Di)Alkylaminocarbonyl oder eine Aminogruppe mit einer oder zwei C₁-C₆-Alkylgruppen bedeuten,
R¹⁰ für Wasserstoff, Cyano, C₁-C₃₀-Alkyl, C₆-C₁₈-Aryl, C₇-C₂₄-Aralkyl, C₁-C₃₀-Alkoxy, Amino, eine Aminogruppe mit einer oder zwei C₁-C₆-Alkylgruppen, C₂-C₁₂-Acyl, C₁-C₁₂-Alkoxycarbonyl, C₁-C₁₂-(Di)-Alkylaminocarbonyl bedeutet,
R¹¹ für Wasserstoff, Halogen, Nitro, C₁-C₄-Alkoxycarbonyl, C₁-C₄-Acyl, C₈-C₂₄-Aralkenyl, unsubstituiertes Amino oder für ein- oder zweifach, gleich oder verschieden durch C₁-C₃₀-Alkyl, C₆-C₁₈-Aryl oder C₇-C₂₄-Aralkyl substituiertes Amino steht,
R¹¹ weiterhin für Morpholinyl, Piperidinyl, Pyrrolidinyl oder Piperazinyl steht, die einen oder zwei Substituenten ausgewählt aus Methyl, Ethyl und/oder Phenyl tragen können,
R¹² für Wasserstoff, C₁-C₃₀-Alkyl, C₆-C₁₈-Aryl, C₇-C₂₄-Aralkyl oder C₁-C₃₀-Alkoxy steht,
R¹³ für Wasserstoff, C₁-C₃₀-Alkyl, C₆-C₁₈-Aryl, C₇-C₂₄-Aralkyl, C₁-C₃₀-Alkoxy oder 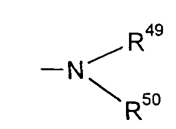 steht, wobei
R⁴⁹ und R⁵⁰ unabhängig voneinander für C₁-C₃₀-Alkyl, C₆-C₁₈-Aryl, C₇-C₂₄-Aralkyl stehen oder
R⁴⁹ und R⁵⁰ weiterhin gemeinsam mit dem Stickstoffatom, an das sie gebunden sind, für Morpholinyl, Piperidinyl, Pyrrolidinyl oder Piperazinyl stehen, die einen oder zwei gleich oder verschiedene Substituenten ausgewählt aus Methyl, Ethyl und Phenyl tragen können,
R¹⁴ und R¹⁵ unabhängig voneinander Wasserstoff, Cyano, Halogen, Nitro, C₁-C₃₀-Alkyl, C₁-C₃₀-Alkoxy, C₆-C₁₈-Aryl oder C₇-C₂₄-Aralkyl, C₁-C₁₂-Alkoxycarbonyl, C₂-C₁₂-Acyl, C₁-C₁₂-(Di)Alkylaminocarbonyl, C₁-C₆-(Di)Alkylamino bedeuten,
R¹⁷ Wasserstoff, C₁-C₃₀-Alkyl, C₆-C₁₈-Aryl oder C₇-C₂₄-Aralkyl bedeuten und
R¹⁶, R¹⁸ bis R²² und R²⁴ bis R⁴⁰ unabhängig voneinander Wasserstoff, Cyano, C₁-C₃₀-Alkyl, C₆-C₁₈-Aryl, C₇-C₂₄-Aralkyl, C₁-C₃₀-Alkoxy, eine Aminogruppe mit einer oder zwei C₁-C₆-Alkylgruppen, unsubstituiertes Amino, C₂-C₁₂-Acyl, C₁-C₁₂-Alkoxycarbonyl oder C₁-C₁₂-(Di)Alkylaminocarbonyl bedeuten, wobei die aliphatischen Kohlenstoffketten, wie z.B. Alkyl, Alkoxy, Alkylamino, Aralkyl, in den Resten von R⁴ bis R¹³, R¹⁶ bis R⁴⁰ durch eines oder mehrere, vorzugsweise ein oder zwei Heteroatome ausgewählt aus Sauerstoff, Stickstoff und Schwefel und/oder durch einen oder mehrere, vorzugsweise ein oder zwei Phenylenringe, die durch C₁-C₄-Alkyl und/oder Halogen substituiert sein können, unterbrochen sein können,
und wobei weiterhin die Anknüpfung des Luminophors an die Polymerseitenketten über ein Sauerstoff einer Hydroxy- oder Carboxygruppe oder ein Stickstoff einer Amino- oder primären Aminogruppe an den obengenannten Substituenten erfolgt.

3. Copolymerisate gemäß Anspruch 1 und 2, wobei L für einen Fluoreszenzfarbstoff ausgewählt aus der Gruppe der Cumarine der Formel (4), 'Pyrene der Formel (5), 1,8-Naphthalimide der Formel (6), 1,8-Naphthaloylen-1',2'-benzimidazole der Formel (7), Phenotiazine oder Phenoxazine der Formel (8), Carbazole und Fluorene der Formel (10) steht.

4. Verfahren zur Herstellung von Copolymerisaten der Formel (1) gemäß Anspruch 1 bis 3, wobei man Monomere der Formel (20) oder (21) 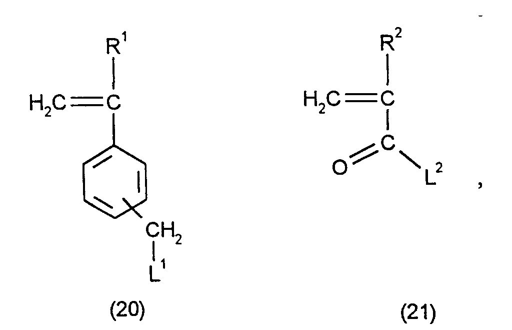 aus einem mit einer OH-, COOH- oder NH-Gruppe funktionalisierten Fluoreszenzfarbstoff, welcher die Struktur von L enthält, und einem Styrol- oder Acrylsäurederivat der Formel (22) und (23) 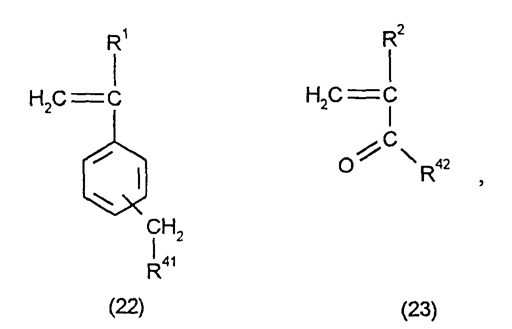 worin
R¹ und R² den obengenannten Bedeutungsumfang haben,
R⁴¹ für Halogen steht und
R⁴² für Halogen, eine Hydroxy- oder C₁-C₆-Alkoxygruppe, steht,
in Gegenwart eine Base herstellt und diese dann gegebenenfalls in Gegenwart von Comonomeren der Bausteine gemäß Formel (3) polymerisiert.

5. Verwendung der Copolymerisate der Formel (1) gemäß Anspruch 1 bis 4 zur Herstellung von elektrolumineszierenden Anordnungen.

6. Elektrolumineszierende Anordnung, die als elektrolumineszierende Substanz Copolymerisate gemäß Anspruch 1 bis 4 enthält.

7. Elektrolumineszierende Anordnung gemäß Anspruch 6, enthaltend zwei Elektroden, zwischen denen sich eine elektrolumineszierende Schicht befindet, die die Copolymerisate als elektrolumineszierende Schicht enthalten, und wobei zwischen der elektrolumineszierenden Schicht und den Elektroden eine oder mehrere Zwischenschichten angeordnet sein können.

## Claims

1. Copolymers which contain at least two repeat chain units of the general formulae (1) and/or (2) and optionally contain repeat units of the general formula (3) 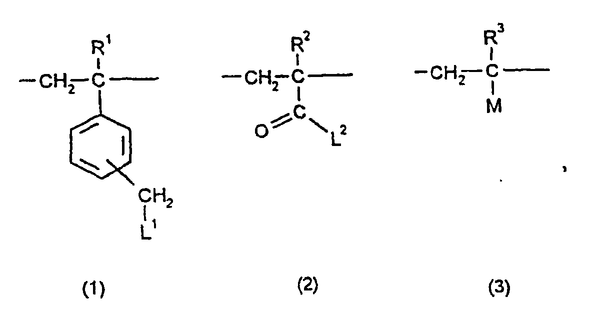 in which
R¹, R² and R³ mutually independently mean hydrogen or C₁-C₆ alkyl,
M denotes CN or C₁-C₃₀ alkoxycarbonyl, C₁-C₃₀ (di)alkylaminocarbonyl, C₁-C₃₀ alkylcarbonyl, which may each be substituted by hydroxy or C₁-C₆ alkoxycarbonyl and furthermore denotes phenyl, naphthyl, anthracenyl, pyridyl or carbazolyl, which may each be substituted by residues from the group halogen, hydroxy, silyl, C₁-C₃₀ alkyl, C₆-C₁₈ aryl, C₁-C₃₀ alkoxy, C₁-C₃₀ alkoxycarbonyl, C₁-C₃₀ acyloxy and C₁-C₃₀ alkylcarbonyl,
L¹ and L² mean a photoluminescent residue,
wherein the proportion of structural units of the formulae (1) and/or (2) is in each case 0.5 to 60 mol%, and (3) 40 to 99.5 mol%, and the molar percentages add up to 100.

2. Copolymers according to claim 1, wherein
L¹ and L² mutually independently denote a photoluminescent residue which is based on the skeleton of a fluorescent dye which is selected from the group of coumarins of the formula (4) 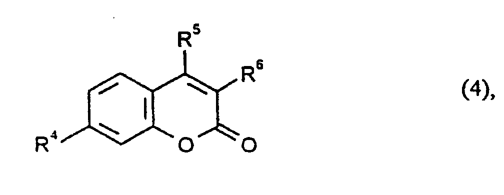
pyrenes of the formula (5) 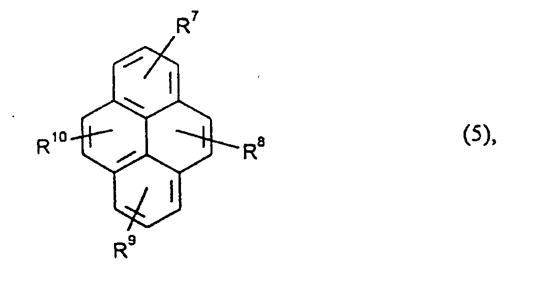
1,8-naphthalimides of the formula (6) 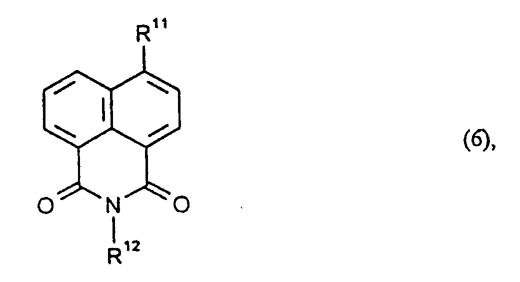
1,8-naphthaloylene-1',2'-benzimidazoles of the formulae (7a) and (7b) 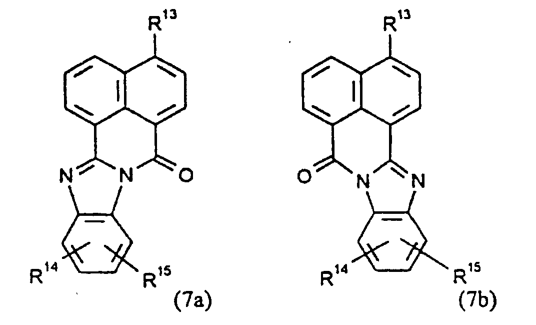
phenothiazines or phenoxazines of the formula (8) 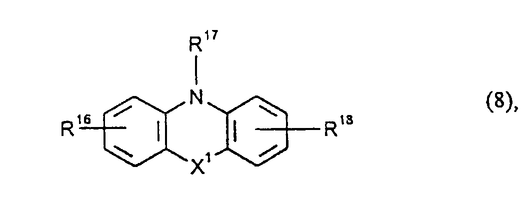 with X¹ = O or S,
benzopyrones of the formula (9) 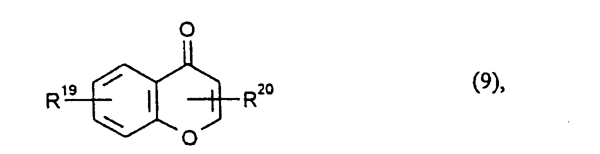 carbazoles, fluorenes, dibenzothiophenes and -furans of the formula (10) 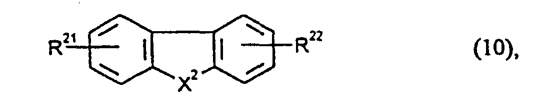 with X² = NR²³, CH₂, S or O, wherein R²³ denotes hydrogen or C₁-C₆ alkyl,
oxazoles, 1,3,4-oxadiazoles of the formula (11) 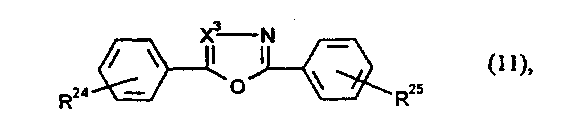 with X³ = CH or N
benzoquinolines of the formula (12) 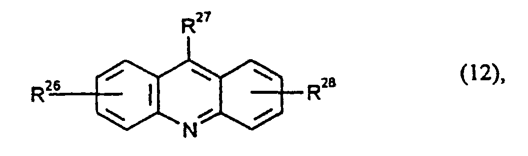
9,10-bis-(phenylethynyl)anthracenes of the formula (13) 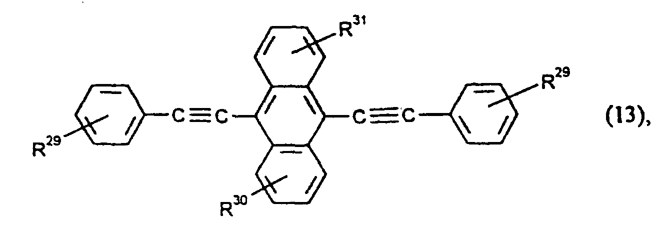
fluorones of the formula (14) 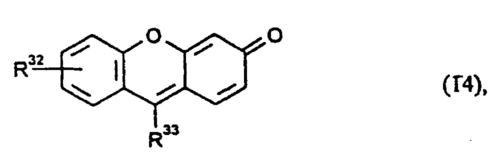
9,10-diphenylanthracene of the formula (15) 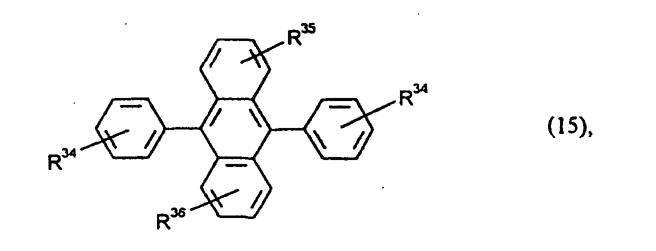
2-styrylbenzazole of the formula (16) 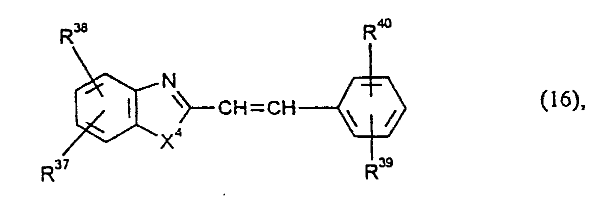 with X⁴ = O, S, Se or CH₂,
wherein
R⁴ denotes hydrogen, C₁-C₃₀ alkyl, C₆-C₁₈ aryl, C₇-C₂₄ aralkyl or C₁-C₃₀ alkoxy or 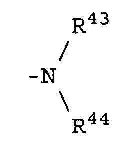 wherein
R⁴³ and R⁴⁴ mutually independently denote hydrogen, C₁-C₃₀ alkyl, C₆-C₁₈ aryl, C₇-C₂₄ aralkyl, which may each be substituted by hydroxy, amino, carboxy or C₁-C₄ alkoxycarbonyl, or
R⁴³ and R⁴⁴, together with the nitrogen atom to which they are attached, may mean a morpholine, piperidine, pyrrolidine or piperazine ring, which may bear one or two substituents from the group methyl, ethyl and phenyl,
R⁵ denotes hydrogen, cyano, C₁-C₃₀ alkyl, C₆-C₁₈ aryl, C₇-C₂₄ aralkyl, C₁-C₃₀ alkoxy, C₂-C₁₂ acyl, C₁-C₁₂ alkoxycarbonyl, C₁-C₁₂ (di)alkylaminocarbonyl,
R⁶ denotes hydrogen, cyano, C₁-C₃₀ alkyl, C₆-C₁₈ aryl, C₇-C₂₄ aralkyl, C₁-C₃₀ alkoxy or 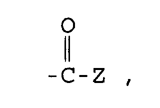 wherein Z denotes a group OR⁴⁵ or 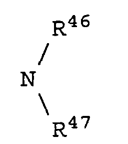 and
R⁴⁵, R⁴⁶ and R⁴⁷ mutually independently denote C₁-C₃₀ alkyl, C₆-C₁₈ aryl or C₇-C₂₄ aralkyl, wherein the aromatic rings may additionally be further substituted by halogen, C₁-C₆ alkyl, C₁-C₆ alkoxy,
R⁷, R⁸ and R⁹ mutually independently mean hydrogen, C₁-C₃₀ alkyl, C₆-C₁₈ aryl, C₇-C₂₄ aralkyl, C₁-C₃₀ alkoxy, cyano, C₂-C₁₂ alkoxycarbonyl, C₁-C₁₂ (di)alkylaminocarbonyl or an amino group with one or two C₁-C₆ alkyl groups,
R¹⁰ means hydrogen, cyano, C₁-C₃₀ alkyl, C₆-C₁₈ aryl, C₇-C₂₄ aralkyl, C₁-C₃₀ alkoxy, amino, an amino group with one or two C₁-C₆ alkyl groups, C₂-C₁₂ acyl, C₁-C₁₂ alkoxycarbonyl, C₁-C₁₂ (di)alkylaminocarbonyl,
R¹¹ denotes hydrogen, halogen, nitro, C₁-C₄ alkoxycarbonyl, C₁-C₄ acyl, C₈-C₂₄ aralkenyl, unsubstituted amino, or amino identically or differently mono- or disubstituted by C₁-C₃₀ alkyl, C₆-C₁₈ aryl or C₇-C₂₄ aralkyl,
R¹¹ furthermore denotes morpholinyl, piperidinyl, pyrrolidinyl or piperazinyl, which may bear one or two substituents selected from methyl, ethyl and/or phenyl,
R¹² denotes hydrogen, C₁-C₃₀ alkyl, C₆-C₁₈ aryl, C₇-C₂₄ aralkyl or C₁-C₃₀ alkoxy,
R¹³ denotes hydrogen, C₁-C₃₀ alkyl, C₆-C₁₈ aryl, C₇-C₂₄ aralkyl, C₁-C₃₀ alkoxy or 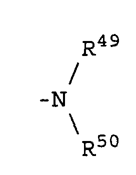 wherein
R⁴⁹ and R⁵⁰ mutually independently denote C₁-C₃₀ alkyl, C₆-C₁₈ aryl, C₇-C₂₄ aralkyl or
R⁴⁹ and R⁵⁰, together with the nitrogen atom to which they are attached, moreover denote morpholinyl, piperidinyl, pyrrolidinyl or piperazinyl, which may bear one or two identical or different substituents selected from methyl, ethyl and phenyl,
R¹⁴ and R¹⁵ mutually independently mean hydrogen, cyano, halogen, nitro, C₁-C₃₀ alkyl, C₁-C₃₀ alkoxy, C₆-C₁₈ aryl or C₇-C₂₄ aralkyl, C₁-C₁₂ alkoxycarbonyl, C₂-C₁₂ acyl, C₁-C₁₂ (di)alkylaminocarbonyl, C₁-C₆ (di)alkylamino,
R¹⁷ means hydrogen, C₁-C₃₀ alkyl, C₆-C₁₈ aryl or C₇-C₂₄ aralkyl and
R¹⁶, R¹⁸ to R²² and R²⁴ to R⁴⁰ mutually independently mean hydrogen, cyano, C₁-C₃₀ alkyl, C₆-C₁₈ aryl, C₇-C₂₄ aralkyl, C₁-C₃₀ alkoxy, an amino group with one or two C₁-C₆ alkyl groups, unsubstituted amino, C₂-C₁₂ acyl, C₁-C₁₂ alkoxycarbonyl or C₁-C₁₂ (di)alkylaminocarbonyl, wherein the aliphatic carbon chains, such as, for example, alkyl, alkoxy, alkylamino, aralkyl, in the residues R⁴ to R¹³, R¹⁶ to R⁴⁰ may be interrupted by one or more, preferably one or two heteroatoms selected from oxygen, nitrogen and sulfur and/or by one or more, preferably one or two, phenylene rings, which may be substituted by C₁-C₄ alkyl and/or halogen,
and wherein furthermore the luminophore is attached to the polymer side chains via an oxygen of a hydroxy or carboxy group or a nitrogen of an amino or primary amino group on the above-stated substituents.

3. Copolymers according to claims 1 and 2, wherein L denotes a fluorescent dye selected from the group of coumarins of the formula (4), pyrenes of the formula (5), 1,8-naphthalimides of the formula (6), 1,8-naphthoylene-1',2'-benzimidazoles of the formula (7), phenothiazines or phenoxazines of the formula (8), carbazoles and fluorenes of the formula (10).

4. Process for the production of copolymers of the formula (1) according to claims 1 to 3, wherein monomers of the formula (20) or (21) are produced 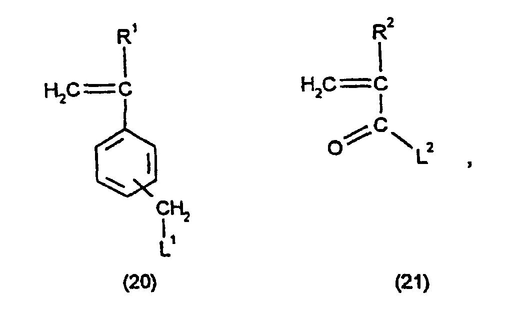 from a fluorescent dye functionalised with an OH, COOH or NH group, which dye contains the structure of L, and a styrene or acrylic acid derivative of the formulae (22) and (23) 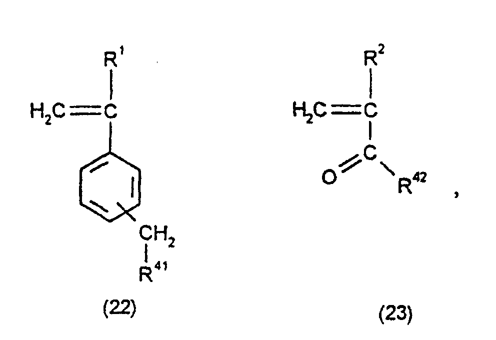 in which
R¹ and R² have the above-stated range of meaning and
R⁴¹ denotes halogen and
R⁴² denotes halogen, a hydroxy or C₁-C₆ alkoxy group,
in the presence of a base and these monomers are then polymerised, optionally in the presence of units of the formula (3) as comonomers.

5. Use of the copolymers of the formula (1) according to claims 1 to 4 for the production of electroluminescent arrangements.

6. Electroluminescent arrangement which contains copolymers according to claims 1 to 4 as the electroluminescent substance.

7. Electroluminescent arrangement according to claim 6 containing two electrodes, between which is located an electroluminescent layer, which contain the copolymers as the electroluminescent layer, and wherein one or more interlayers may be arranged between the electroluminescent layer and the electrodes.

## Revendications

1. Copolymères qui contiennent au moins deux motifs récurrents constitutifs de chaine de formule générale (1) et/ou (2) et facultativement, des unités récurrentes de formule générale (3) : 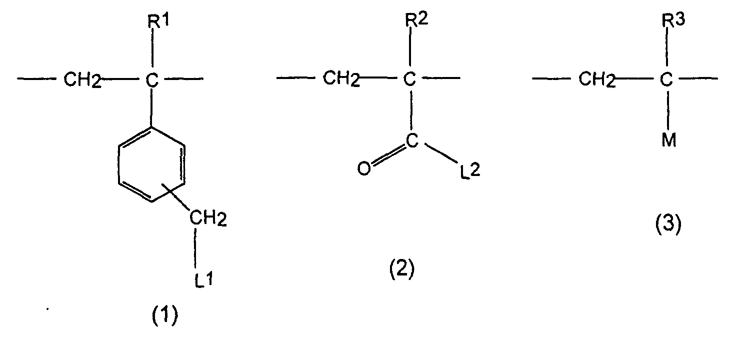 où
R¹, R² et R³ signifient, indépendamment l'un de l'autre, l'atome d'hydrogène ou un alcoyle en C₁-C₆,
M représente le radical CN ou un (alcoxy en C₁-C₃₀)carbonyle, un (di) (alcoyl en C₁-C₃₀)aminocarbonyle, un (alcoyl en C₁-C₃₀)carbonyle, qui peuvent chaque fois être substitués par le radical hydroxyle ou un (alcoxy en C₁-C₆)carbonyle, d'autre part, représente les radicaux phényle, naphtyle, anthracényle, pyridyle ou carbazolyle, qui peuvent être chaque fois substitués par un reste parmi le groupe constitué des atomes d'halogène, des radicaux hydroxyle, silyle, alcoyle en C₁-C₃₀, aryle en C₆-C₁₈, alcoxy en C₁-C₃₀, (alcoxy en C₁-C₃₀)carbonyle, acyloxy en C₁-C₃₀ et (alcoyl en C₁-C₃₀)carbonyle ;
L¹ et L² signifient un reste photoluminescent,
où la quantité des unités structurales des formules (1) et/ou (2) se situe chaque fois, dans l'intervalle allant de 0,5 à 60% en moles et la quantité des unités structurales de formule (3) se situe dans l'intervalle allant de 40 à 99,5% en moles, les quantités molaires se complètent pour faire 100%.

2. Copolymères suivant la revendication 1, où
L¹ et L² représentent indépendamment l'un de l'autre, un reste photoluminescent, qui est basé sur le squelette d'un colorant fluorescent, qui est choisi parmi le groupe des coumarines de formule (4) 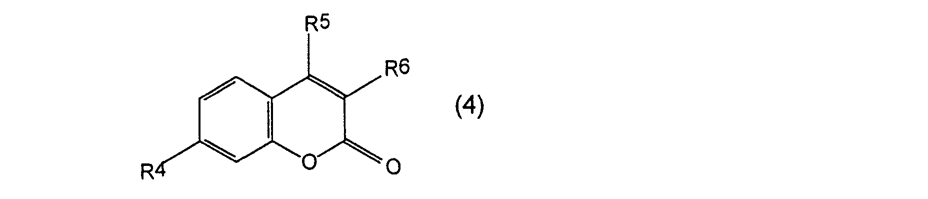
des pyrènes de formule (5) 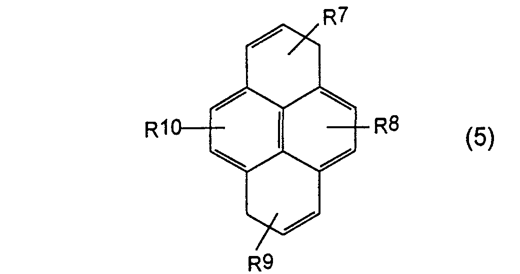
des 1,8-naphtalimides de formule (6) 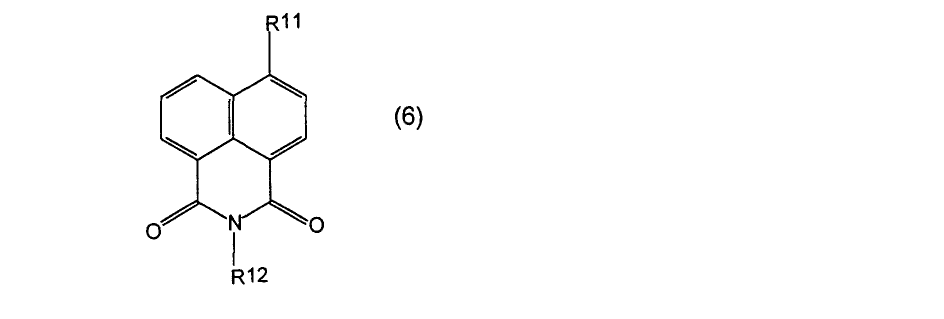
des 1,8-naphtaloylène-1',2'-benzimidazoles de formules (7a) et (7b) 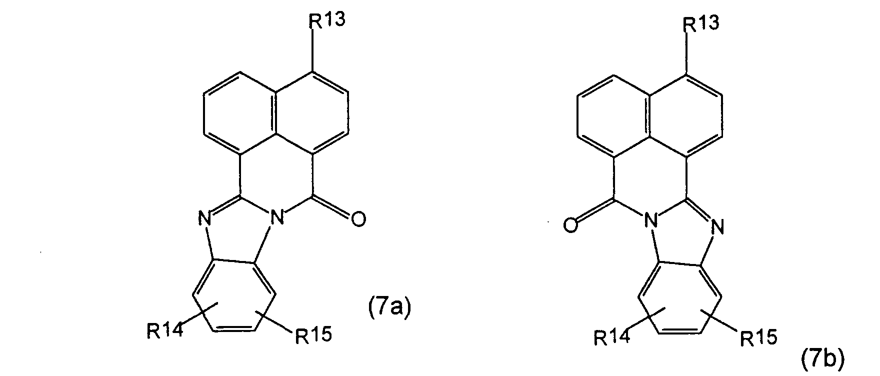
des phénothiazines ou phénoxazines de formule (8) 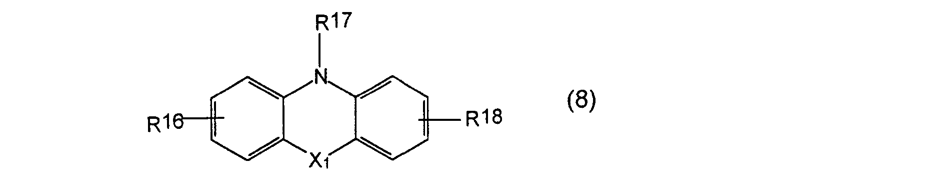
avec X¹ = O ou S ;
des benzopyrones de formule (9) 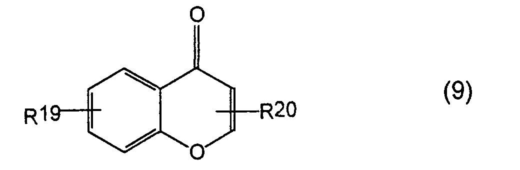
des carbazoles, fluorènes, dibenzothiophènes et -furannes de formule (10) 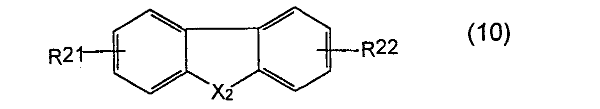
avec X² = NR²³, CH₂, S ou O, où R²³ représente l'atome d'hydrogène ou un alcoyle en C₁-C₆ ;
des oxazoles, 1,3,4-oxadiazoles de formule (11) 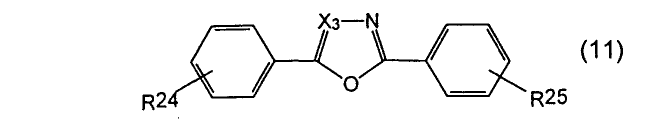
avec X³ = CH ou N ;
des benzoquinoléines de formule (12) 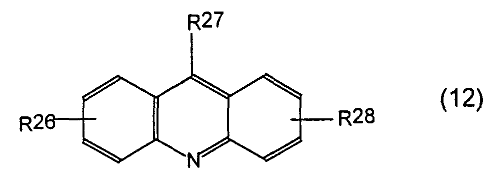
des 9, 10-bis(phényléthynyl)anthracènes de formule (13) 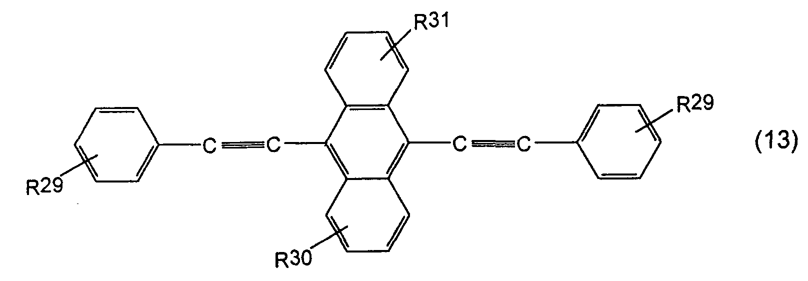
des fluorones de formule (14) 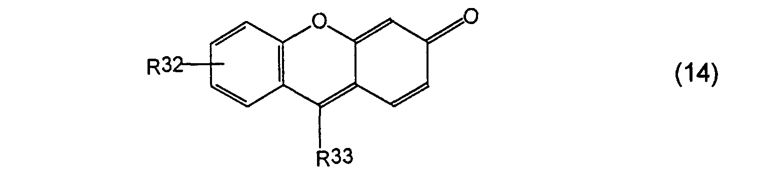
des 9,10-diphénylanthracènes de formule (15) 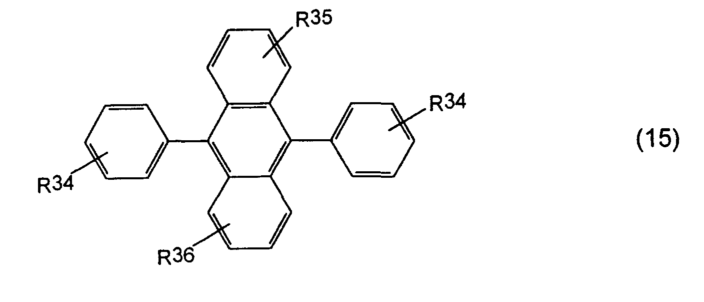
des 2-styrylbenzazoles de formule (16) 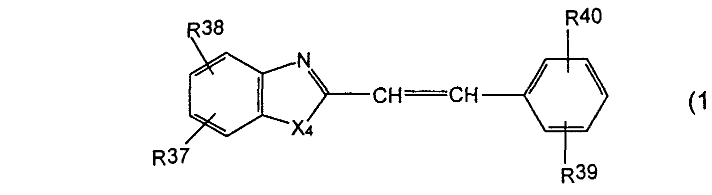
avec X⁴ = O, S, Se ou CH₂ ;
où
R⁴ représente l'atome d'hydrogène, un alcoyle en C₁-C₃₀, un aryle en C₆-C₁₈ ou un aralcoyle en C₇-C₂₄ ou un alcoxy en C₁-C₃₀, ou -NR⁴³R⁴⁴, où
R⁴³ et R⁴⁴ représentent indépendamment l'un de l'autre, l'atome d'hydrogène, un alcoyle en C₁-C₃₀, un aryle en C₆-C₁₈, un aralcoyle en C₇-C₂₄, qui peuvent être chaque fois, substitués par les radicaux hydroxyle, amino, carboxy ou un (alcoxy en C₁-C₄)carbonyle, ou
R⁴³ et R⁴⁴ avec l'atome d'azote auquel ils sont liés, peuvent représenter un cycle morpholine, pipéridine, pyrrolidine ou pipérazine, qui peut porter un ou deux substituants parmi le groupe des radicaux méthyle, éthyle et phényle ;
R⁵ représente l'atome d'hydrogène, le radical cyano, un alcoyle en C₁-C₃₀, un aryle en C₆-C₁₈, un aralcoyle en C₇-C₂₄, un alcoxy en C₁-C₃₀, un acyle en C₂-C₁₂, un (alcoxy en C₁-C₁₂)carbonyle, un di(alcoyle en C₁-C₁₂)aminocarbonyle ;
R⁶ représente l'atome d'hydrogène, le radical cyano, un alcoyle en C₁-C₃₀, un aryle en C₆-C₁₈, un aralcoyle en C₇-C₂₄, un alcoxy en C₁-C₃₀, ou 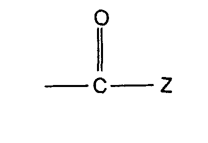
où Z représente un radical OR⁴⁵ ou NR⁴⁶R⁴⁷,
R⁴⁵, R⁴⁶ et R⁴⁷ représentent indépendamment l'un de l'autre, un alcoyle en C₁-C₃₀, un aryle en C₆-C₁₈ ou un aralcoyle en C₇-C₂₄, où les cycles aromatiques peuvent en outre, être substitués par un atome d'halogène, un alcoyle en C₁-C₆, un alcoxy en C₁-C₆ ;
R⁷, R⁸ et R⁹ représentent indépendamment l'un de l'autre, l'atome d'hydrogène, un alcoyle en C₁-C₃₀, un aryle en C₆-C₁₈, un aralcoyle en C₇-C₂₄, un alcoxy en C₁-C₃₀, le radical cyano, un (alcoxy en C₁-C₁₂)carbonyle, un (di) (alcoyle en C₁-C₁₂)aminocarbonyle ou un radical amino avec un ou deux radicaux alcoyle en C₁-C₆ ;
R¹⁰ représente l'atome d'hydrogène, le radical cyano, un alcoyle en C₁-C₃₀, un aryle en C₆-C₁₈, un aralcoyle en C₇-C₂₄, un alcoxy en C₁-C₃₀, le radical amino, un radical amino avec un ou deux radicaux alcoyle en C₁-C₆, un acyle en C₂-C₁₂, un (alcoxy en C₁-C₁₂)carbonyle, un (di) (alcoyle en C₁-C₁₂)aminocarbonyle ;
R¹¹ représente les atomes d'hydrogène, d'halogène, le radical nitro, un (alcoxy en C₁-C₄)carbonyle, un acyle en C₁-C₄, un aralcényle en C₈-C₂₄, le radical amino non substitué ou amino substitué une ou deux fois, de manière identique ou différente, par un alcoyle en C₁-C₃₀, un aryle en C₆-C₁₈ ou un aralcoyle en C₇-C₂₄,
R¹¹ représente d'autre part, les radicaux morpholinyle, pipéridinyle, pyrrolidinyle ou pipérazinyle, qui peuvent porter un ou deux substituants choisis parmi le groupe des radicaux méthyle, éthyle et/ou phényle ;
R¹² représente l'atome d'hydrogène, un alcoyle en C₁-C₃₀, un aryle en C₆-C₁₈, un aralcoyle en C₇-C₂₄ ou un alcoxy en C₁-C₃₀ ;
R¹³ représente l'atome d'hydrogène, un alcoyle en C₁-C₃₀, un aryle en C₆-C₁₈, un aralcoyle en C₇-C₂₄, un alcoxy en C₁-C₃₀ ou le radical NR⁴⁹R⁵⁰ où
R⁴⁹ et R⁵⁰ représentent indépendamment l'un de l'autre, un alcoyle en C₁-C₃₀, un aryle en C₆-C₁₈, un aralcoyle en C₇-C₂₄ ou
R⁴⁹ et R⁵⁰ avec l'atome d'azote auquel ils sont liés, peuvent représenter les radicaux morpholinyle, pipéridinyle, pyrrolidinyle ou pipérazinyle, qui peuvent porter un ou deux substituants, identiques ou différents, choisis parmi le groupe des radicaux méthyle, éthyle et phényle ;
R¹⁴ et R¹⁵ représentent indépendamment l'un de l'autre, l'atome d'hydrogène, le radical cyano, les atomes d'halogène, le radical nitro, un alcoyle en C₁-C₃₀, un alcoxy en C₁-C₃₀, un aryle en C₆-C₁₈ ou un aralcoyle en C₇-C₂₄, un (alcoxy en C₁-C₁₂)carbonyle, un acyle en C₂-C₁₂, un (di) (alcoyl en C₁-C₁₂)aminocarbonyle, un (di) (alcoyl en C₁-C₆)amino ;
R¹⁷ représente l'atome d'hydrogène, un alcoyle en C₁-C₃₀, un aryle en C₆-C₁₈ ou un aralcoyle en C₇-C₂₄, et
R¹⁶, R¹⁸ à R²² et R²⁴ à R⁴⁰ représentent indépendamment l'un de l'autre, l'atome d'hydrogène, le radical cyano, un alcoyle en C₁-C₃₀, un aryle en C₆-C₁₈ ou un aralcoyle en C₇-C₂₄, un alcoxy en C₁-C₃₀, un radical amino avec un ou deux radicaux alcoyle en C₁-C₆, le radical amino non substitué, un acyle en C₂-C₁₂, un (alcoxy en C₁-C₁₂)carbonyle ou un (di) (alcoyl en C₁-C₁₂)aminocarbonyle, où les chaines hydrocarbonées aliphatiques, comme par exemple alcoyle, alcoxy, alcoylamino, aralcoyle dans les restes R⁴ à R¹³ et R¹⁶ à R⁴⁰, peuvent être interrompues par un ou plusieurs, de préférence un ou deux hétéroatomes, choisis parmi les atomes d'oxygène, d'azote et de soufre et/ou par un ou plusieurs, de préférence un ou deux cycles phényle, qui peuvent être substitués par alcoyle en C₁-C₄ et/ou par un atome d'halogène ;
et où d'autre part, la liaison du luminophore sur les chaines latérales polymères est réalisée par un atome d'oxygène d'un radical hydroxyle ou carboxyle ou un atome d'azote d'un radical amino ou amino primaire sur les substituants cités ci-dessus.

3. Copolymères suivant les revendications 1 et 2, où L représente un colorant fluorescent, qui est choisi parmi le groupe des coumarines de formule (4), des pyrènes de formule (5), des 1,8-naphtalimides de formule (6), des 1,8-naphtaloylène-1',2'-benzimidazoles de formule (7), des phénothiazines ou phénoxazines de formule (8), des carbazoles et fluorènes de formule (10).

4. Procédé de préparation des copolymères de formule (1) suivant les revendications 1 à 3, où l'on prépare les monomères de formule (20) ou (21) : 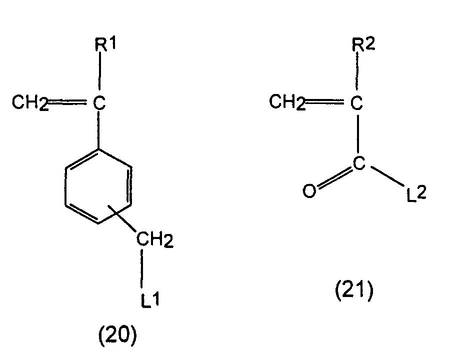
à partir d'un colorant fluorescent fonctionnalisé par un radical OH, COOH ou NH, lequel contient la structure de L,
et à partir d'un dérivé du styrène ou de l'acide acrylique des formules (22) et (23) : 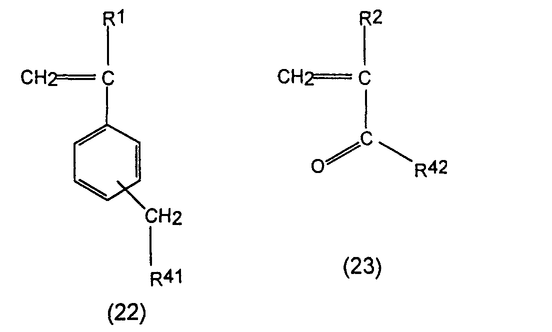 où
R¹ et R² ont les limites de signification indiquées ci-dessus, et
R⁴¹ représente un atome d'halogène, et
R⁴² représente un atome d'halogène, un radical hydroxy ou alcoxy en C₁-C₆,
en présence d'une base, et on soumet ceux-ci à une polymérisation, facultativement en présence de comomonères des motifs suivant la formule (3).

5. Utilisation des copolymères de formule (1) suivant les revendications 1 à 4, pour la préparation de dispositifs électroluminescents.

6. Dispositif électroluminescent, qui contient comme substance électroluminescente, les copolymères suivant les revendications 1 à 4.

7. Dispositif électroluminescent suivant la revendication 6, contenant deux électrodes entre lesquelles se trouve une couche électroluminescente, qui contient les copolymères comme couche électroluminescente, et où entre la couche électroluminescente et les électrodes peuvent être disposées une ou plusieurs couches intermédiaires.
